(19) Europäisches Patentamt
European Patent Office
Office européen des brevets

(11) EP 2 273 603 A1

(12) EUROPEAN PATENT APPLICATION
published in accordance with Art. 153(4) EPC

(43) Date of publication:
**12.01.2011 Bulletin 2011/02**

(21) Application number: **09738737.7**

(22) Date of filing: **22.04.2009**

(51) Int Cl.:
***H01M 14/00*** (2006.01) ***H01L 31/04*** (2006.01)
***H01L 31/042*** (2006.01) ***H01M 2/08*** (2006.01)
***H01M 2/26*** (2006.01)

(86) International application number:
**PCT/JP2009/058010**

(87) International publication number:
**WO 2009/133800 (05.11.2009 Gazette 2009/45)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **30.04.2008 JP 2008118478**

(71) Applicant: **Nitto Denko Corporation**
**Ibaraki-shi**
**Osaka 567-8680 (JP)**

(72) Inventors:
- **HASEGAWA, Yuki**
**Ibaraki-shi**
**Osaka 567-8680 (JP)**
- **IGARASHI, Kazumasa**
**Ibaraki-shi**
**Osaka 567-8680 (JP)**
- **HIWATASHI, Kenichi**
**Chigasaki-shi**
**Kanagawa 253-0041 (JP)**
- **MASUYAMA, Naoto**
**Tokyo 104-8165 (JP)**

(74) Representative: **HOFFMANN EITLE**
**Patent- und Rechtsanwälte**
**Arabellastraße 4**
**81925 München (DE)**

# (54) PIGMENT-SENSITIZED SOLAR BATTERY

(57) A dye-sensitized solar cell is provided, which includes: a pair of electrode substrates (1, 1') bonded to each other with a seal member (7) with their electrically conductive electrode surfaces facing inward, one of the electrode substrates being opaque or translucent, the other electrode substrate being transparent; and an electrolyte solution contained therein. The seal member (7) is composed of a material cured by photopolymerizing a photopolymerizable composition essentially comprising a hydrogenated elastomer derivative having at least one (meth) acryloyl group at at least one of its opposite molecular terminals, and the electrode substrates (1, 1') each have a portion coated with a silane coupling agent of a (meth)acryloxyalkylsilane in contact with the seal member (7). Therefore, the dye-sensitized solar cell has higher adhesive sealability and excellent durability.

Fig. 1

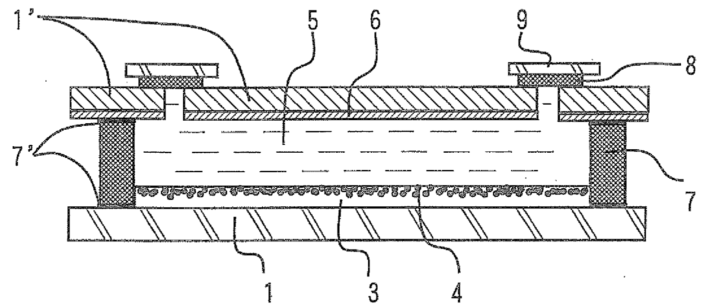


EP 2 273 603 A1

## Description

### Technical Field

The present invention relates to a dye-sensitized solar cell which includes a pair of electrode substrates adhesively sealed in opposed relation, and an electrolyte solution filled in a space between the electrode substrates. More specifically, the invention relates to a dye-sensitized solar cell including a seal member which is highly resistant to the electrolyte solution and excellent in adhesive sealability and durability.

### Background Art

A dye-sensitized solar cell which includes an electrically conductive transparent substrate formed with a dye-carrying semiconductor film such as of $TiO_2$, a counter electrode substrate and a redox-type electrolyte solution filled in a space between these substrates is promising as a less expensive next-generation solar cell because of its higher solar light conversion efficiency.
However, if a conventionally used ethylene-methacrylic acid copolymer ionomer resin is used as a sealing material for a dye-sensitized solar cell including a redox-type electrolyte solution such as of iodine or lithium iodide filled in a space between glass substrates or plastic film substrates, it is impossible to prevent leakage of the electrolyte solution and absorption of external moisture. Therefore, the dye-sensitized solar cell of this type is poor in durability. On the other hand, epoxy resin sealing materials, urethane resin sealing materials and photo-curable acryl resin sealing materials known to be used as liquid crystal sealing materials are liable to swell with the electrolyte solution due to their polar structures. This adversely affects the structure of the dye-sensitized solar cell.
In view of this, it is proposed that a liquid epoxy resin or a silicone resin is used for sealing the electrolyte solution (see PLT1). On the other hand, a sealing material containing a silane coupling agent and prepared by polymerizing an organo-hydrogen polysiloxane and a polyisoprene polymer having at least one alkenyl group in its molecule to be subjected to a hydrosilylation reaction in the presence of a hydrosilylation catalyst is proposed as a sealing material containing an elastomer more excellent in electrolyte solution resistance for the dye-sensitized solar cell (PLT2).

### Citation List

### Patent Literature

PLT1: JP-A-2000-30767
PLT2: JP-A-2004-95248

### Summary of Invention

### Technical Problem

However, the sealing material (seal member) disclosed in PLT1 suffers from swelling or degradation of the resin with the electrolyte solution during prolonged sealing use, and has unsatisfactory properties. The sealing material disclosed in PLT2 requires heating to 80°C to 150°C for curing. The heating evaporates the electrolyte solution, leading to separation of the seal member. This results in leakage of the electrolyte solution.
In view of the foregoing, it is an object of the present invention to provide a dye-sensitized solar cell which includes a seal member free from the swelling and the degradation during prolonged sealing use and that is excellent in sealability.

### Solution to Problem

According to a first aspect of the present invention to achieve the object described above, there is provided a dye-sensitized solar cell, which includes: a pair of electrode substrates spaced a predetermined distance from each other with their electrically conductive electrode surfaces facing inward, one of the electrode substrates being opaque or translucent, the other electrode substrate being transparent; a seal member disposed along peripheries of inner surfaces of the electrode substrates to seal a space defined between the electrode substrates; and an electrolyte solution filled in the sealed space; wherein the seal member is composed of a material cured by photopolymerizing the following composition (A), and the electrode substrates each have a portion coated with a silane coupling agent of a (meth)

acryloxyalkylsilane in contact with the seal member:

(A) a photopolymerizable composition essentially comprising a hydrogenated elastomer derivative having at least one (meth)acryloyl group at at least one of its opposite molecular terminals.

According to a second aspect of the present invention, there is provided a dye-sensitized solar cell, which includes: a pair of electrode substrates spaced a predetermined distance from each other with their electrically conductive electrode surfaces facing inward, at least one of the electrode substrates being transparent; a seal member disposed along peripheries of inner surfaces of the electrode substrates to seal a space defined between the electrode substrates; an electrolyte solution filled in the sealed space; a collector wiring conductor member of a predetermined shape distributively provided on at least one of the inner surfaces of the electrode substrates; and a covering protective member which covers and protects the collector wiring conductor member; wherein the seal member and the covering protective member are composed of a material cured by photopolymerizing the following composition (A); wherein the electrode substrates each have a portion coated with a silane coupling agent of a (meth)acryloxyalkylsilane in contact with the seal member; wherein the collector wiring conductor member has a portion coated with at least one of a glass agent and the silane coupling agent in contact with the covering protective member:

(A) a photopolymerizable composition essentially comprising a hydrogenated elastomer derivative having at least one (meth)acryloyl group at at least one of its opposite molecular terminals.

<u>Process to Achieve the Invention</u>

The inventors of the present invention conducted studies to provide sealing excellent in electrolyte solution resistance and adhesiveness and highly durable in the dye-sensitized solar cell. In the course of the studies, the inventors came up with an idea that photopolymerizable resin compositions containing a photopolymerizable resin as an effective component are useful as the sealing material, and further conducted studies. As a result, the inventors found that specific ones of the photopolymerizable resin compositions are effective as the sealing material, and that a special surface coating treatment of the portions of the electrode substrates to be brought into contact with the sealing material is essential for effective sealing.

On the assumption that transparent electrode substrates, e.g., "a pair of glass substrates each having a transparent electrically conductive electrode film" are used as the electrode substrates for the dye-sensitized solar cell, the inventors previously conducted intensive studies on a sealing material for the dye-sensitized solar cell including the pair of transparent electrode substrates, and filed a patent application (Japanese Patent Application No. 2007-110739) based on the studies.

As a result of further studies, however, the inventors found that both of the electrode substrates of the dye-sensitized solar cell are not necessarily required to be transparent, i.e., if one of the electrode substrates is transparent, the other electrode substrate is not necessarily required to be transparent. The inventors found that substrates of various materials are usable as the other electrode substrate, and the sealing material and the special surface coating treatment are applicable to the various material substrates.

Further, the inventors found that the specific photopolymerizable resin composition for the seal member is very useful not only when it is used for the seal member of the dye-sensitized solar cell but also when it is used as a coating material for preventing the collector wiring conductor member provided on the inner surface of the electrode substrate (on the side of the electrolyte solution) from being corroded by the electrolyte solution.

Thus, the inventors came up with an idea of using the specific photopolymerizable resin composition (which is the most distinctive feature of the present invention) not only as the sealing material irrespective of the material for the substrate, but also as the coating material for the wiring conductor member, i.e., for the covering protective member for the wiring conductor member, and attained the present invention.

**Advantageous Effects of Invention**

In the inventive dye-sensitized solar cell, the seal member is composed of the material cured by photopolymerizing the photopolymerizable composition (A) essentially comprising the hydrogenated elastomer derivative having at least one (meth)acryloyl group at at least one of its opposite molecular terminals, and the glass substrates each have a portion coated with the silane coupling agent of the (meth)acryloxyalkylsilane in contact with the seal member. That is, the present invention obviates the need for the heat-curing because the seal member is composed of the material cured by the photopolymerization, so that the separation of the seal member is prevented which may otherwise occur due to the evaporation of the electrolyte solution caused by the heating. The material for the seal member is cured by photopolymerizing the specific photopolymerizable composition (A) and, therefore, is free from the swelling and the

degradation with the electrolyte solution during prolonged sealing use. In addition, the synergetic effect of the aforementioned specific silane coupling agent on the electrode substrates ensures higher adhesiveness and higher durability.

The silane coupling agent is of the (meth)acryloxyalkylsilane. With the use of the silane coupling agent, photopolymerizable (meth)acryloyl groups are present in the surface coating layers on the electrode substrates, and undergo the photopolymerization reaction together with the (meth)acryloyl groups in the photopolymerizable composition (A) to provide strong adhesiveness.

Where the opaque or translucent one of the electrode substrates is a metal substrate in the present invention, the photo-electric conversion efficiency is more excellent.

Where the opaque or translucent one of the electrode substrates is a substrate having a carbon conductor film, the dye-sensitize solar cell is less expensive, and lighter in weight.

The dye-sensitized solar cell may further include a collector wiring conductor member of a predetermined shape distributively provided on the inner surfaces of the electrode substrates, and a covering protective member which covers and protects the collector wiring conductor member, wherein the seal member and the covering protective member are composed of a material cured by photopolymerizing the aforesaid photopolymerizable composition (A), wherein the electrode substrates each have a portion coated with a silane coupling agent of a (meth) acryloxyalkylsilane in contact with the seal member, wherein the collector wiring conductor member has a portion coated with at least one of a glass agent and the silane coupling agent in contact with the covering protective member. In this case, it is possible to prevent the breakage of the collector wiring and the malfunction of the dye-sensitized solar cell. In addition, the same material can be employed for the seal member and the covering protective member, thereby improving the productivity and the workability.

Where the photopolymerizable composition (A) contains a phyllosilicate or an insulative spherical inorganic filler, the seal member, the covering protective members and the like have a reduced moisture permeability and, hence, are further excellent in durability with reduced moisture absorption from the atmosphere during prolonged sealing use. Further, the photopolymerizable composition has higher thixotropy, thereby improving the dimensional accuracy of a seal width.

Where 3-(meth)acryloxypropyltrimethoxysilane is used as the silane coupling agent, the seal member also has excellent adhesiveness.

Where the hydrogenated elastomer derivative contains a hydrogenated polybutadiene or a hydrogenated polyisoprene in its main chain, the nonpolar structure of the main chain improves the durability against the electrolyte solution.

Where the hydrogenated elastomer derivative is a hydrogenated polybutadiene derivative or a hydrogenated polyisoprene derivative obtained through a reaction between a hydrogenated polybutadiene polyol and a hydroxy(meth)acrylate compound or between a hydrogenated polyisoprene polyol and the hydroxy(meth)acrylate compound by using a polyisocyanate as a linking group, the seal member and the covering protective member also have excellent adhesiveness and excellent durability.

Where the hydrogenated elastomer derivative is a hydrogenated polybutadiene derivative or a hydrogenated polyisoprene derivative obtained through a reaction between a hydrogenated polybutadiene polyol and a (meth)acryloyl-containing isocyanate compound or between a hydrogenated polyisoprene polyol and the (meth)acryloyl-containing isocyanate compound, the seal member and the covering protective member also have excellent adhesiveness and excellent durability as in the aforementioned case.

Where the photopolymerizable composition (A) contains a poly(meth)acrylate compound in addition to the hydrogenated elastomer derivative, the crosslinking density of the material for the seal member and the covering protective member is increased. Therefore, the seal member and the covering protective member are also excellent in durability and, when a photopolymerization initiator is used, the curability with ultraviolet (UV) radiation is improved.

## Brief Description of Drawings

Fig. 1 is a sectional view illustrating an exemplary dye-sensitized solar cell according to the first aspect.
Fig. 2 is a sectional view illustrating an exemplary dye-sensitized solar cell according to the second aspect.

## Description of Embodiments

Embodiments of the present invention will hereinafter be described.

There are provided dye-sensitized solar cells according to the aforementioned first and second aspects of the present invention. These dye-sensitized solar cells have the following same technical feature. The most distinctive feature of the present invention is that: the dye-sensitized solar cells each include a pair of electrode substrates, a seal

member and an electrolyte solution filled in a closed space defined by the electrode substrates and the seal member; the seal member is composed of a material cured by photopolymerizing a photopolymerizable composition (A) essentially containing a hydrogenated elastomer derivative having at least one (meth)acryloyl group at at least one of its opposite molecular terminals; and the electrode substrates each have a portion coated with a silane coupling agent of a (meth) acryloxyalkylsilane in contact with the seal member. In the present invention, the term (meth)acryloyl group means an acryloyl group and a corresponding methacryloyl group shown below:

Acryloyl group

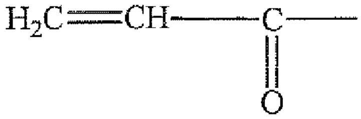

Methacryloyl group

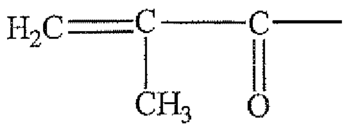

The dye-sensitized solar cell according to the first aspect of the present invention (hereinafter referred to as "cell (I)") will first be described.

Cell (I)

The cell (I) is typically configured as shown in Fig. 1. The cell (I) includes an opaque or translucent electrode substrate 1' and a transparent electrode substrate 1, which are spaced a predetermined distance from each other with their electrically conductive electrode surfaces facing inward. A space defined between the electrode substrates 1 and 1' is sealed with a seal member 7 (main seal) formed from an inventive specific photopolymerizable composition (A) and disposed along peripheral edges of the inner surfaces of the electrode substrates. An electrolyte solution 5 is filled in the sealed space. The electrode substrates 1, 1' each have a portion formed with a coating film 7' of an inventive specific silane coupling agent in contact with the seal member 7.

As shown in Fig. 1, the cell (I) typically includes a porous semiconductor film 3 such as a titanium oxide film provided on the electrode substrate 1. A sensitizing dye 4 is adsorbed on the porous semiconductor film 3. A catalyst film 6 such as a very thin platinum film is provided on the electrically conductive electrode surface of the other electrode substrate 1'. In Fig. 1, the upper electrode substrate 1' serves as a positive electrode, and the lower electrode substrate 1 serves as a negative electrode.

In the cell (I), as shown in Fig. 1, the electrode substrate 1' typically has openings for injection of the electrolyte solution. The openings are each sealed with a seal member 8 (end seal). The seal member 8 is generally sealed with a seal cap 9 such as a thin glass piece. The inventive cell (I) will hereinafter be described based on Fig. 1. However, the invention is not limited to the cell shown in Fig. 1. The components of the cell (I) will be individually described below.

Electrode substrates 1, 1'

The positive electrode substrate 1' is an opaque or translucent electrode substrate, and the negative electrode substrate 1 is a transparent electrode substrate. The term "transparent" means that the visible light transmittance is higher than 80%. The term "translucent" means that the visible light transmittance is higher than 0% and not higher than 80%. The term "opaque" means that the visible light transmittance is 0%. In the present invention, the visible light transmittance is determined by a commercially available common visible light transmittance meter.

The transparent electrode substrate 1 is not particularly limited, as long as it is transparent. Examples of the transparent electrode substrate include inorganic substrates such as of white glass, soda glass, borosilicate glass and ceramics, and resin substrates such as of polyethylenes (PE), polypropylenes (PP), polyesters, nylons, polyethylene terephthalates (PET), polyethylene naphthalates (PEN), vinyl chloride resins, silicone resins, polycarbonates and polyimides, and organic/inorganic hybrid substrates, among which the inorganic substrates are preferred for heat resistance.

In general, a transparent substrate does not have electrical conductivity. In order to employ the transparent substrate for the electrode substrate, the transparent substrate is used as a support base, and a transparent conductor film is provided on one surface of the support base. Exemplary materials for the transparent conductor film include indium-tin complex oxide (ITO), fluorine-doped tin oxide (FTO), antimony-doped tin oxide (ATO) and tin oxide, which may be used either alone or in combination. If the transparent support base per se is composed of an electrically conductive material such as an electrically conductive plastic, there is no need to provide the transparent conductor film, but the support base per se may be used as the electrode substrate.

As described above, the opaque or translucent electrode substrate 1' typically has a visible light transmittance of not higher than 80%, preferably not higher than 70%, more preferably not higher than 60%.

Materials for the opaque or translucent electrode substrate 1' are roughly classified into two categories. An electrode substrate classified in a first category is an electrically conductive opaque or translucent substrate. Examples of such a substrate include metal substrates such as of titanium, tungsten, gold, silver, copper, and carbon substrates such as of graphite, carbon black, glassy carbon, carbon nano-tube and fullerene. More specifically, a substrate of a material containing a metal or carbon as a major component is preferred. Here, the expression "major component" means a component that accounts for the majority of the material, and also means that the material may consist of the major component alone. In this case, the electrically conductive substrate per se can serve as the electrode substrate, obviating the need for providing the conductor film on the substrate.

An electrode substrate classified in a second category is an electrode substrate that includes an electrically non-conductive or less conductive substrate as a support base and a conductor film provided on the support base to impart the substrate with sufficient electrically conductivity, and is opaque or translucent as a whole. The support base of the electrode substrate may be either transparent or opaque, but the conductor film is either opaque or translucent. Therefore, the electrode substrate is opaque or translucent as a whole.

The support base of the electrode substrate is not particularly limited, but examples of the support base include inorganic substrates, such as of glass, and resin substrates, among which the inorganic substrates are preferred for durability. The conductor film is not particularly limited, but examples of the conductor film include conductor films such as of graphite, carbon black, glassy carbon, carbon nano-tube and fullerene, and metal conductor films such as of titanium, gold, silver and copper. Particularly, the carbon conductor films are preferred for reduction in weight. Further, the conductor film may be a laminate including a plurality of layers.

The conductor film has a visible light transmittance that can be changed from a translucent level to an opaque level by changing the thickness thereof. The thickness of the conductor film is preferably 0.01 to 10 $\mu$m.

In the present invention, the negative electrode substrate 1 may be an opaque or translucent electrode substrate, and the positive electrode substrate 1' may be a transparent electrode substrate.

Porous semiconductor film 3

The porous semiconductor film 3 provided on the electrode substrate 1 is not particularly limited, but is, for example, a porous n-type metal oxide semiconductor film, such as of titanium oxide. Semiconductor particles to be employed for formation of the porous semiconductor film 3 may be in a granular form, a needle-like form, a tubular form, a cylindrical form or other linear form. The semiconductor particles of any of these linear forms may be present in combination.

Sensitizing dye 4

The sensitizing dye 4 to be adsorbed on the porous semiconductor film 3 is, for example, a sensitizing dye that is capable of absorbing solar light having a wavelength of 300 to 2000 nm and adsorbable on the porous semiconductor film 3. Exemplary materials for the sensitizing dye 4 include inorganic semiconductors such as silicon, gallium arsenide, indium phosphide, cadmium selenide, cadmium sulfide and CuInSe, inorganic pigments such as of chromium oxide, iron oxide and nickel oxide, and organic pigments such as of ruthenium complex, porphyrin, phthalocyanine, merocyanine, coumarin and indoline.

Electrolyte solution 5

The electrolyte solution 5 to be filled in the space between the electrode substrates 1 and 1' is an electrolyte-containing liquid, and includes an electrolyte and a liquid medium. Examples of the electrolyte include iodine-containing quaternary ammonium salts and lithium salts. Examples of the liquid medium include ethylene carbonate, acetonitrile and methoxypropionitrile. The electrolyte solution is prepared by mixing tetrapropylammonium iodide, lithium iodide, iodine or the like in any of these liquid media.

Catalyst film 6

A very thin film such as of platinum or carbon is provided as the catalyst film 6 on the inner surface of the upper one 1' of the electrode substrates 1, 1' in Fig. 1 (on the side of the electrolyte solution). This improves the migration of positive holes in the electrode substrate 1'. It is particularly preferred to employ a platinum vapor deposition film. However, the provision of the catalyst film 6 is not essential.

Coating films 7

As described above, the portions of the electrode substrates 1, 1' to be brought into contact with the seal member 7 are each formed with the coating film 7' by applying the silane coupling agent of the (meth)acryloxyalkylsilane. Examples of the (meth)acryloxyalkylsilane silane coupling agent include acryloxyalkylsilanes and methacryloxyalkylsilanes. Preferred examples of the (meth)acryloxyalkylsilane include 3-acryloxypropyltrimethoxysilane and 3-methacryloxypropyltrimethoxysilane, of which 3-acryloxypropyltrimethoxysilane having higher photopolymerization reactivity is more preferred. These (meth) acryloxyalkylsilane silane coupling agents may be used either alone or in combination.

Seal members

The seal member 7 provided between the electrode substrates 1 and 1' is composed of the material cured by photopolymerizing the aforementioned photopolymerizable composition (A). The photopolymerizable composition (A) essentially contains the hydrogenated elastomer derivative, preferably, as a major component. The hydrogenated elastomer derivative is not particularly limited as long as it has at least one (meth)acryloyl group at at least one of its opposite molecular terminals. The major chain of the hydrogenated elastomer derivative is preferably a hydrogenated polybutadiene or a hydrogenated polyisoprene.

Examples of the hydrogenated polybutadiene as the main chain of the hydrogenated elastomer derivative include hydrogenated1, 4-polybutadienes, hydrogenated 1,2-polybutadienes, and copolymers and the like of hydrogenated 1,4-polybutadienes and hydrogenated 1,2-polybutadienes. Examples of the hydrogenated polyisoprene include hydrogenated 1,4-polyisoprenes, hydrogenated 1,2-polyisoprenes, and copolymers and the like of hydrogenated 1,4-polyisoprenes and hydrogenated 1,2-polyisoprenes.

More preferably, the hydrogenated elastomer derivative is a hydrogenated polybutadiene derivative (a1) or a hydrogenated polyisoprene derivative (a2) obtained through a reaction between a hydrogenated polybutadiene polyol and a hydroxy(meth)acrylate compound or between a hydrogenated polyisoprene polyol and the hydroxy(meth)acrylate compound by using a polyisocyanate as a linking group. Further, the hydrogenated elastomer derivative may be a hydrogenated polybutadiene derivative (a3) or a hydrogenated polyisoprene derivative (a4) obtained through a reaction between a hydrogenated polybutadiene polyol and a (meth) acryloyl-containing isocyanate compound or between a hydrogenated polyisoprene polyol and the (meth)acryloyl-containing isocyanate compound.

Components to be employed for synthesis of the hydrogenated polybutadiene derivative (a1) or the hydrogenated polyisoprene derivative (a2) through the reaction between the hydrogenated polybutadiene polyol and the hydroxy (meth)acrylate compound or between the hydrogenated polyisoprene polyol and the hydroxy(meth)acrylate compound by using the polyisocyanate as the linking group will be described.

The hydrogenated polybutadiene polyol and the hydrogenated polyisoprene polyol are preferably telechelic polymers each having reactive functional groups such as hydroxyl groups at opposite molecular terminals thereof. Examples of the hydrogenated polybutadiene polyol and the hydrogenated polyisoprene polyol include hydrogenated polybutadienes and hydrogenated polyisoprenes each having hydroxyl groups at opposite molecular terminals thereof.

The hydrogenated polybutadiene polyol is preferably a liquid hydrogenated polybutadiene polyol having a number average molecular weight of 500 to 5000, and the hydrogenated polyisoprene polyol is preferably a liquid hydrogenated polyisoprene polyol having a number average molecular weight of 500 to 130000.

Examples of the polyisocyanate serving as the linking group include hexamethylene diisocyanate, norbornene diisocyanate, isophorone diisocyanate, xylylene diisocyanate, hydrogenated xylylene diisocyanate, dicyclohexylmethane diisocyanate, tolylene diisocyanate, diphenylmethane diisocyanate and naphthalene diisocyanate, which may be used either alone or in combination. Particularly, saturated diisocyanates such as hexamethylene diisocyanate, norbornene diisocyanate, isophorone diisocyanate, hydrogenated xylylene diisocyanate and dicyclohexylmethane diisocyanate are preferably usable.

Examples of the hydroxy(meth)acrylate compound include monofunctional hydroxy(meth)acrylate compounds such as 2-hydroxyethyl (meth)acrylate, 2-hydroxypropyl (meth)acrylate, 2-hydroxybutyl (meth)acrylate, 2-hydroxyethyl (meth)acryloyl phosphate, 4-hydroxybutyl (meth)acrylate and 2-(meth)acryloyloxyethyl-2-hydroxypropyl phthalate, difunctional hydroxy(meth)acrylate compounds such as glycerin di(meth)acrylate and trimethylolpropane di(meth)acrylate, and multifunctional hydroxy(meth)acrylate compounds such as 2-hydroxy-1,3-dimethacryloxypropane (glycerin dimethacrylate) and pentaerythritol tri(meth)acrylate, among which the multifunctional hydroxy(meth)acrylate compounds having two or more functional groups are preferred for improvement of the crosslinking density. In the present invention, the (meth)acrylate means an acrylate and a corresponding methacrylate.

For the synthesis, the proportions of the hydrogenated polybutadiene polyol or the hydrogenated polyisoprene polyol, the polyisocyanate and the hydroxy(meth)acrylate compound are as follows:

The polyisocyanate is preferably blended in a proportion of 2 to 10 equivalents, more preferably 4 to 8 equivalents, per hydroxyl equivalent (an average molecular weight per hydroxyl group) of the hydrogenated polybutadiene

polyol or the hydrogenated polyisoprene polyol. If the proportion is less than 2 equivalents, a higher molecular weight linear polymer is liable to be produced. If the proportion is greater than 10 equivalents, a greater number of unreacted isocyanate groups tend to remain.

The hydroxy(meth)acrylate compound is preferably blended in a proportion of 1 to 2 equivalents, more preferably 1.1 to 1.3 equivalents, per isocyanate equivalent (a molecular weight per isocyanate group) of the polyisocyanate. If the proportion is less than 1 equivalent, isocyanate groups tend to remain. If the proportion is greater than 2 equivalents, a greater amount of the hydroxy(meth)acrylate compound tends to remain.

The hydrogenated polybutadiene derivative (a1) or the hydrogenated polyisoprene derivative (a2) is synthesized, for example, in the following manner. The hydrogenated polybutadiene polyol or the hydrogenated polyisoprene polyol is caused to react with the polyisocyanate in the presence of a catalyst of a metal such as titanium or tin or an organic metal salt such as dibutyltin laurate. After the hydroxyl groups of the hydrogenated polybutadiene polyol or the hydrogenated polyisoprene polyol sufficiently react with the isocyanate groups, the hydroxy(meth)acrylate compound is added for a reaction with the residual isocyanate groups. Thus, the hydrogenated elastomer derivative is provided. Where the resulting hydrogenated elastomer derivative is highly viscous or semi-solid, the hydrogenated elastomer derivative is heated to 30°C to 80°C, or a solvent such as toluene or xylene is added to the reaction system. Thus, the reaction smoothly proceeds, thereby facilitating the synthesis.

The degree of the synthesis reaction can be determined by measuring the infrared absorption spectrum at a characteristic absorption band attributable to the isocyanate group (at about 2260 $cm^{-1}$), because the absorbance at the characteristic absorption band attributable to the isocyanate group is reduced as the reaction proceeds. The completion of the synthesis reaction is determined based on the fact that the absorbance at the characteristic absorption band attributable to the isocyanate group is reduced to zero.

After the completion of the reaction, the reaction product is rinsed with a solvent such as acetonitrile for removal of a soluble component thereof, and then the solvent is removed in a known manner by means of an evaporator or the like. Thus, the hydrogenated elastomer derivative having at least one (meth) acryloyl group at at least one of its opposite molecular terminals according to the present invention is provided.

On the other hand, components to be employed for synthesis of the hydrogenated polybutadiene derivative (a3) or the hydrogenated polyisoprene derivative (a4) through the reaction between the hydrogenated polybutadiene polyol and the (meth)acryloyl-containing isocyanate compound or between the hydrogenated polyisoprene polyol and (meth)acryloyl-containing isocyanate compound will be described.

The hydrogenated polybutadiene polyol and the hydrogenated polyisoprene polyol are preferably telechelic polymers each having reactive functional groups such as hydroxyl groups at opposite molecular terminals thereof. Examples of the hydrogenated polybutadiene polyol and the hydrogenated polyisoprene polyol include hydrogenated polybutadienes and hydrogenated polyisoprenes each having hydroxyl groups at opposite molecular terminals thereof.

The hydrogenated polybutadiene polyol is preferably a liquid hydrogenated polybutadiene polyol having a number average molecular weight of 500 to 5000, and the hydrogenated polyisoprene polyol is preferably a liquid hydrogenated polyisoprene polyol having a number average molecular weight of 500 to 130000.

Examples of the (meth)acryloyl-cantaining isocyanate compound include 2-(meth)acryloyloxyethyl isocyanate and 1,1-bis(acryloyloxymethyl) ethyl isocyanate.

For the synthesis, the proportions of the hydrogenated polybutadiene polyol or the hydrogenated polyisoprene polyol and the (meth)acryloyl-containing isocyanate compound are as follows:

The (meth)acryloyl-containing isocyanate compound is preferably blended in a proportion of 1 to 3 equivalents, more preferably 1.2 to 2 equivalents, per hydroxyl equivalent (an average molecular weight per hydroxyl group) of the hydrogenated polybutadiene polyol or the hydrogenated polyisoprene polyol. If the proportion is less than 1 equivalent, hydroxyl groups tend to remain. If the proportion is greater than 3 equivalents, unreacted isocyanate groups tend to remain.

The hydrogenated polybutadiene derivative (a3) or the hydrogenated polyisoprene derivative (a4) is synthesized, for example, in the following manner. The hydrogenated polybutadiene polyol or the hydrogenated polyisoprene polyol is caused to react with the (meth)acryloyl-containing isocyanate compound in the presence of a catalyst of a metal such as titanium or tin or an organic metal salt such as dibutyltin laurate. The reaction between the hydroxyl groups of the hydrogenated polybutadiene polyol or the hydrogenated polyisoprene polyol and the isocyanate groups of the (meth) acryloyl-containing isocyanate compound provides the hydrogenated elastomer derivative. Were the resulting hydrogenated elastomer derivative is highly viscous or semi-solid, the hydrogenated elastomer derivative is heated to 30°C to 80°C, or a solvent such as toluene or xylene is added to the reaction system. Thus, the reaction smoothly proceeds, thereby facilitating the synthesis.

The degree of the synthesis reaction can be determined by measuring the infrared absorption spectrum at a characteristic absorption band attributable to the isocyanate group (at about 2260 $cm^{-1}$), because the absorbance at the characteristic absorption band attributable to the isocyanate group is reduced as the reaction proceeds. The completion of the synthesis reaction is determined when the absorbance at the characteristic absorption band attributable to the isocyanate group is reduced to zero.

After the completion of the reaction, the reaction product is rinsed with a solvent such as acetonitrile for removal of a soluble component thereof, and then the solvent is removed in a known manner by means of an evaporator or the like. Thus, the hydrogenated elastomer derivative having at least one (meth) acryloyl group at at least one of its opposite molecular terminals according to the present invention is provided.

The proportion of the hydrogenated elastomer derivative is preferably 1 to 99 wt%, more preferably 10 to 90 wt%, based on the overall amount of the photopolymerizable composition (A) in the present invention.

In the present invention, the photopolymerizable composition (A) to be used for the seal member 7 essentially contains any of the aforementioned various hydrogenated elastomer derivatives, and may contain a phyllosilicate and/or an insulative spherical inorganic filler as optional components. These may be used either alone or in combination.

The phyllosilicate is a silicate mineral including exchangeable interlaminar cations, and may be a naturally occurring phyllosilicate or a synthesized phyllosilicate. The phyllosilicate is not particularly limited, but examples thereof include smectite clay minerals such as montmorillonite, saponite, hectorite, beidellite, stevensite and nontrolite, and swellable mica, vermiculite and halloysite, which may be used either alone or in combination. Particularly, at least one of swellable mica and lipophilic smectite each subjected to an organic treatment and having affinity for an organic solvent with their interlaminar Na ions exchanged with cations is preferably used.

The form of the phyllosilicate is not particularly limited, but the phyllosilicate is preferably crystalline particles having an average length of 0.005 to 10 μm and a thickness of 0.001 to 5 μm with an aspect ratio of 10 to 500.

The phyllosilicate is a laminar clay mineral having metal cations such as Na ions intercalated between its layers. A phyllosilicate organically treated with dimethyl distearyl ammonium chloride, chloroaminolauric acid, a quaternary ammonium salt or a quaternary phosphonium salt for ion exchange of the Na ions is preferably used. The organically treated phyllosilicate with its Na ions ion-exchanged has higher affinity for the resin and, therefore, can be easily dispersed in the resin by means of a high-speed shearing dispersing machine such as a three-roll mill or a ball mill.

Examples of the insulative spherical inorganic filler include silica powder, alumina powder, titanium oxide powder, calcium carbonate powder and calcium silicate powder, which may be used either alone or in combination. It is possible to design the insulative spherical inorganic filler in any desired manner to impart surfaces of the filler with a hydrophobic property or a hydrophilic property for dispersibility of the filler in the hydrogenated elastomer derivative. For easier improvement of the affinity for the resin component, the silica powder is preferably used, and fused spherical silica powder is particularly preferred.

The insulative spherical inorganic filler preferably has an average particle diameter of 0.01 to 1 μm and a maximum particle diameter of not greater than 10 μm, more preferably an average particle diameter of 0.05 to 1 μm and a maximum particle diameter of not greater than 1 μm. If the average particle diameter is less than 0.01 μm, the specific surface area is too great, so that the effect of reducing the moisture permeability of the cured material is insufficient. If the average particle diameter is greater than 1 μm, the UV transmissive property of the seal member is impaired, so that the photo-curability is unsatisfactory. If the maximum particle diameter is greater than 10 μm, the UV transmissive property is impaired, so that the photo-curability is unsatisfactory.

The average particle diameter and the maximum particle diameter are measured, for example, by means of a laser diffraction-scattering particle size distribution analyzer. The average particle diameter and the maximum particle diameter are values determined with the use of samples arbitrarily extracted from a population by means of the aforementioned analyzer.

The organically treated phyllosilicates out of the aforementioned phyllosilicates, and the insulative spherical inorganic fillers are preferably chemically surface-modified. This improves the affinity for the resin component such as the hydrogenated elastomer derivative, thereby contributing to reduction in the viscosity of the uncured solution and improvement of the dispersibility of the phyllosilicate and the insulative spherical inorganic filler.

A compound to be used for the chemical modification is not particularly limited, as long as it is reactive with functional groups such as hydroxyl groups and carboxyl groups present in surfaces of the organically treated phyllosilicate and the insulative spherical inorganic filler. Preferred examples of such a compound include reactive silane compounds such as silane coupling agents and silylation agents, titanate compounds and isocyanate compounds, which may be used either alone or in combination.

The compound for the chemical modification is used in the same manner as in a conventionally known surface treatment of an inorganic filler, e.g., a surface treatment to be performed in an organic solvent.

The silane coupling agent is not particularly limited, but examples thereof include 2-(3,4-epoxycyclohexyl) ethyltrimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-triethoxysilyl-N-(1,3-dimethylbutylidene)propylamine, N-phenyl-3-aminopropyltriethoxysilane, a hydrochloric acid salt of N-(vinylbenzyl)-2-aminoethyl-3-aminopropyltrimethoxysilane, 3-ureidopropyltrimethoxysilane, 3-chloropropyltrimethoxysilane, 3-mercaptopropylmethyldimethoxysilane, 3-mercaptopropyltrimethoxysilane, bis(triethoxysilylpropyl) tetrasulfide and 3-isocyanatopropyltriethoxysilane, which may be used either alone or in combination.

The silylation agent is not particularly limited, but examples thereof include methyltrichlorosilane, methyldichlorosilane, dimethyldichlorosilane, trimethylchlorosilane, phenyltrichlorosilane, diphenyldichlorosilane, trifluoropropyltrichlorosilane and hexamethyldisilazane, which may be used either alone or in combination.

The titanate compound is not particularly limited, but examples thereof include tetraalkyl titanate compounds such as tetraisopropyl titanate and tetra-n-butyl titanate, and their lower molecular weight condensation products, which may be used either alone or in combination.

The isocyanate compound is not particularly limited, but examples thereof include (meth)acryloxyisocyanate compounds such as 2-isocyanatoethyl methacrylate, 2-isocyanatoethyl acrylate and 1,1-bis (acryloxymethyl)ethyl isocyanate, which may be used either alone or in combination.

The phyllosilicate is preferably present in the composition (A) in a proportion of 0.1 to 20 wt%, more preferably 1 to 10 wt%, based on the overall amount of the sealing material. If the proportion is less than 0.1 wt%, the moisture permeability of the sealing material is insufficiently reduced. If the proportion is greater than 20 wt%, the viscosity of the uncured liquid sealing material is extremely high, thereby causing a problem in a coating process.

The insulative spherical inorganic filler is preferably present in the composition (A) in a proportion of 30 to 70 wt%, more preferably 40 to 60 wit%, based on the overall amount of the sealing material. If the proportion is less than 30 wt%, the moisture permeability of the sealing material is insufficiently reduced. If the proportion is greater than 70 wt%, the viscosity of the uncured liquid sealing material is extremely high, thereby causing a problem in the coating process.

As required, the photopolymerizable composition (A) may further contain a poly(meth)acrylate compound (b) and a photopolymerization initiator (c) as optional components.

The poly(meth)acrylate compound (b) serves as a diluent when the hydrogenated elastomer derivative is blended in the photopolymerizable composition (A), and serves as a crosslinking agent when the photopolymerizable composition (A) is cured. Examples of the poly(meth)acrylate compound include multifunctional (meth)acrylates.

Examples of the multifunctional (meth)acrylates include difunctional (meth)acrylates such as 1,4-butandiol di (meth)acrylate, 1,6-hexandiol di(meth)acrylate, 1,9-nonandiol di(meth)acrylate, 1,10-decandiol di(meth)acrylate, 1,12-dodecandiol di(meth)acrylate, 1,12-octadecandiol di(meth)acrylate, 2-n-butyl-2-ethyl-1,3-propandiol di(meth)acrylate, tripropyleneglycol di(meth)acrylate, norbornene di(meth)acrylate and dimethyloldicyclopentane di(meth)acrylate, trifunctional (meth)acrylates such as trimethylolpropane tri(meth)acrylate and pentaerythritol tri(meth)acrylate, and other poly (meth)acrylate compounds, which may be used either alone or in combination. For compatibility with the hydrogenated elastomer derivative, dimethyloldicyclopentane di(meth)acrylate is preferably used.

In the present invention, a monofunctional (meth)acrylate may be used in combination with any of the aforementioned multifunctional (meth)acrylates as the poly(meth)acrylate compound (b), as long as the adhesiveness of the seal member of the dye-sensitized solar cell is not impaired.

Examples of the monofunctional (meth)acrylate include isobutyl (meth)acrylate, t-butyl (meth)acrylate, isooctyl (meth)acrylate, lauryl (meth)acrylate, styryl (meth)acrylate, isobonyl (meth)acrylate and cyclohexyl (meth)acrylate, which may be used either alone or in combination.

The proportion of the poly(meth)acrylate compound (b) is preferably 1 to 99 wt%, more preferably 10 to 90 wt%, based on the overall amount of the photopolymerizable composition (A) in the present invention.

Usable as the photopolymerization initiator (c) is a known photo-radical generator. Examples of the photopolymerization initiator include 2,2-dimethoxy-1,2-diphenylethan-1-one, 1-hydroxycyclohexyl phenyl ketone, 2-hydroxy-2-methyl-1-phenylpropan-1-one, 2-methyl-1-(4-methylthiophenyl)-2-morpholinopropan-1-one, bis(2,4,6-trimethylbenzoyl)-phenylphosphine oxide, which may be used either alone or in combination.

The proportion of the photopolymerization initiator (c) is preferably 0.1 to 30 wt%, more preferably 0.5 to 20 wt%, based on the overall amount of the photopolymerizable composition (A) in the present invention. If the proportion is less than 0.1 wt%, the polymerization degree tends to be insufficient. If the proportion is greater than 30 wt%, the amount of a decomposition residue is increased, and the durability of the seal member tends to be impaired.

In addition to the aforementioned components, other additives such as an antioxidant, a defoaming agent, a surfactant, a colorant, an inorganic filler, an organic filler, various spacers and a solvent may be blended, as required, in the photopolymerizable composition (A) to be used for the seal member 7 according to the use purpose in the present invention. These additives may be used either alone or in combination.

The photopolymerizable composition (A) thus prepared is irradiated with ultraviolet radiation by means of a UV lamp or the like and, as required, post-cured at a predetermined temperature to form the seal member 7.

<u>End Seal Members 8</u>

In the cell (I) of Fig. 1, the upper electrode substrate 1' has the openings for the injection of the electrolyte

solution. However, the openings are not necessarily required to be provided in the electrode substrate 1', but may be provided in the seal member 7, the electrode substrate 1 or the like. The openings are respectively end-sealed with the end seal members 8. The end seal members 8 are typically formed by employing the same photopolymerizable composition (A) and the same curing method. Further, a conventionally known material is used for the seal caps 9 of the thin glass pieces for sealing the end seal members 8.

Production method for cell (I)

Next, a method of producing the cell (I) from the aforementioned materials will be described. The cell (I) shown in Fig. 1 is produced, for example, in the following manner.

First, an electrode substrate 1 is prepared. Then, a titanium oxide paste, for example, is applied to a thickness of 5 to 50 μm on an electrically conductive electrode surface of the electrode substrate (on the side of an electrolyte solution), and fired at 400°C to 600°C for 0.5 to 3 hours to form a porous semiconductor film 3. In turn, the electrode substrate formed with the porous semiconductor film is dipped in an ethanol solution containing a sensitizing dye 4 at a controlled concentration. Thereafter, the electrode substrate is dipped in dehydrated ethanol for removal of an excess amount of the sensitizing dye 4, and then dried. Thus, the sensitizing dye 4 is adsorbed on the porous semiconductor film 3. A portion of the electrode substrate 1 to be brought into contact with a seal member 7 is surface-coated with a silane coupling agent of a (meth)acryloxyalkylsilane. This surface coating treatment is performed, for example, by dissolving 0.01 to 5.0 wt% of the silane coupling agent of the (meth)acryloxyalkylsilane in an organic solvent such as methanol or ethanol, applying the resulting solution onto the portion of the electrode substrate 1 to be brought into contact with the seal member 7, and heating the resulting electrode substrate 1 to 60°C to 150°C. Thus, a coating film 7' is formed from the applied solution.

On the other hand, a catalyst film 6 such as a platinum vapor deposition film is formed on an electrically conductive electrode surface of an electrode substrate 1' to be opposed to the electrode substrate 1 on the side of the electrolyte solution by a sputtering method or the like. Then, a portion of the electrode substrate 1' to be brought into contact with the seal member 7 is surface-coated with the silane coupling agent of the (meth) acryloxyalkylsilane (to be thereby formed with a coating film 7') in the same manner as the electrode substrate 1.

The photopolymerizable composition (A) preliminarily prepared is applied onto the predetermined portion of at least one of the electrode substrates 1, 1', whereby the seal member 7 is formed in an uncured state. Then, the electrode substrates 1, 1' are bonded to each other with the seal member 7 with the electrically conductive electrode surfaces thereof facing inward, and the seal member 7 is irradiated with ultraviolet radiation emitted at an irradiation intensity of 0.5 to 10000 $mW/cm^2$ for an irradiation period of 0.5 to 600 seconds by means of an ultraviolet radiation emitting device such as a high pressure mercury lamp (preferably in a nitrogen atmosphere) to be thereby cured for main sealing.

In turn, the electrolyte solution 5 is injected into a space defined between the bonded electrode substrates 1 and 1' through one of openings formed in the electrode substrate 1', and then seal caps 9 of thin glass pieces on which the same compositions as for the seal member 7 and the coating films 7' are applied are respectively placed over the openings. The composition is cured by irradiation with ultraviolet radiation to seal the openings (to form end seal members 8). Thus, the cell (I) shown in Fig. 1 is provided.

In the cell (I) of Fig. 1, the seal member and the like may have a proper thickness (generally equal to a distance between the substrates) and a proper width according to the use purpose and application. In general, the seal member 7 preferably has a width of about 1 to about 5 mm and a thickness of 50 to 500 μm.

It is preferred that the negative electrode substrate 1 is transparent, and the positive electrode substrate 1' is opaque or translucent as shown in Fig. 1. Alternatively, the electrode substrate 1 may be opaque or translucent, and the electrode substrate 1' may be transparent.

Next, the dye-sensitized solar cell according to the second aspect of the present invention (hereinafter sometimes referred to as "cell (II) ") will be described below.

Cell_(I)

The cell (II) is typically configured as shown in Fig. 2. The cell (II) includes a pair of electrode substrates 2, 2' which are transparent electrodes like the electrode substrate 1 of the cell (I). Linear collector wiring conductor members 10 are arranged at a predetermined interval in juxtaposition on an inner surface of the electrode substrate 2 (as extending from the front side to the rear side of the paper of Fig. 2) and respectively covered with covering protective members 11 for protection thereof. The covering protective members 11 are composed of a material cured by photopolymerizing a photopolymerizable composition (A). The collector wiring conductor members each have a portion coated with at least one of a glass agent and a silane coupling agent (not shown) in contact with the corresponding covering protective members 11. The cell (II) has substantially the same construction as the cell (I) except for the aforementioned components, and like or corresponding components will be denoted by like reference characters.

The above characteristic components of the cell (II) will be individually described below.

Electrode substrates 2, 2'

As described above, the electrode substrates 2, 2' shown in Fig. 2 are transparent electrode substrates like the transparent electrode substrate 1 of the cell (I). In the cell (II), however, at least one of the electrode substrates 2, 2' is merely required to be transparent. Therefore, the electrode substrates 2, 2' may be arranged such that: the negative electrode substrate 2 is transparent and the positive electrode substrate 2' is opaque or translucent; or the negative electrode substrate 2 is opaque or translucent and the positive electrode substrate 2' is transparent. The opaque or translucent electrode substrates described for the electrode substrate 1' of the cell (I) are herein usable.

Collector wiring conductor members 10

As shown in Fig. 2, the collector wiring conductor members 10 are distributively provided on the electrically conductive electrode surface of the electrode substrate 2. The collector wiring conductor members 10 reduce the electrical resistance of the electrically conductive electrode surface, thereby improving the photo-electric conversion efficiency. Preferred examples of a material for the collector wiring conductor members 10 include electrically conductive metals and metal oxides, carbon materials, and electrically conductive polymers. Examples of the metal include platinum, gold, silver, ruthenium, copper, aluminum, nickel, cobalt, chromium, iron, molybdenum, titanium and tantalum, and alloys of any of these metals. The carbon materials are not particularly limited, but examples thereof include graphite, carbon black, glassy carbon, carbon nano-tube and fullerene. It is advantageous to use a transparent or translucent metal oxide such as FTO, ITO, indium oxide or zinc oxide for the collector wiring conductor members 10, because the amount of light incident on a sensitizing dye layer can be increased.

The collector wiring conductor members 10 are each preferably configured to have a width of 10 to 3000 μm and a thickness of 1 to 100 μm.

For the distributive provision of the collector wiring conductor members 10 on the electrically conductive electrode surface of the electrode substrate, the collector wiring conductor members 10 are arranged, for example, in a stripe form, a grid form, a radial form or a network form, preferably in a grid form.

Surface coating treatment of conductor members

The collector wiring conductor members 10 are respectively covered with the covering protective members 11 for protection thereof as will be described later. For enhancement of adhesion between the collector wiring conductor members 10 and the covering protective members 11, a surface coating treatment is performed. In the surface coating treatment, coating films (not shown) are respectively formed on portions of the collector wiring conductor members to be brought in contact with the covering protective members on the electrode substrate by applying at least one of the glass agent and the silane coupling agent. The covering protective members 11 are not required to be as highly adhesive as the sealing material (seal member 7). Therefore, the glass agent and/or the silane coupling agent described below may be used.

Examples of the glass agent include $SiO_2$-$Bi_2O_3$-$MO_x$ glass agents and $B_2O_3$-$Bi_2O_3$-$MO_x$ glass agents (wherein M is at least one metal element and X is a positive number of 1 to 3), which contains oxides of Si, B and Bi as major components. These may be used either alone or in combination.

The silane coupling agent is not particularly limited, but examples thereof include 2-(3,4-epoxycyclohexyl) ethyltrimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-triethoxysilyl-N-(1,3-dimethylbutylidene)propylamine, N-phenyl-3-aminopropyltriethoxysilane, a hydrochloric acid salt of N-(vinylbenzyl)-2-aminoethyl-3-aminopropyltrimethoxysilane, 3-ureidopropyltrimethoxysilane, 3-chloropropyltrimethoxysilane, 3-mercaptopropylmethyldimethoxysilane, 3-mercaptopropyltrimethoxysilane, bis(triethoxysilylpropyl) tetrasulfide and 3-isocyanatopropyltriethoxysilane, which may be used either alone or in combination. The (meth)acryloxyalkylsilanes are also advantageously usable.

Covering protective members 11

The collector wiring conductor members 10 are respectively covered and protected with the covering protective members 11 for prevention of breakage thereof due to corrosion by the electrolyte solution. The covering protective members 11 are composed of a material cured by photopolymerizing the photopolymerizable composition (A) which

essentially contains the hydrogenated elastomer derivative having at least one (meth)acryloyl group at at least one of its opposite molecular terminals and is excellent in electrolyte solution resistance and adhesiveness. More specifically, the same material for the seal member 7 may be used for the covering protective members 11.

Production method for cell (II)

Next, a method of producing the cell (II) from the aforementioned materials will be described. The cell (II) shown in Fig. 2 is produced, for example, in the following manner.

First, an electrode substrate 2 is prepared. Then, an electrically conductive material, for example, is applied onto an electrically conductive electrode surface of the electrode substrate (on the side of an electrolyte solution) in a striped wiring pattern having a width of 10 to 3000 μm, a thickness of 1 to 100 μm and a pitch of 4 to 20 mm, and fired at 450°C to 750°C for 0.5 to 3 hours to form collector wiring conductor members 10.

In turn, 0.01 to 5.0 wt% of at least one of the glass agent and the silane coupling agent is dissolved in an organic solvent such as methanol or ethanol, and portions of the collector wiring conductor members 10 to be brought into contact with covering protective members 11 are coated with the resulting solution or paste so as to form coating films each typically having a dry thickness of 0. 01 to 0.3 mm. As required, portions of the electrode substrate 2 to be brought into contact with the covering protective members 11 may also be coated with the solution or the paste. After this coating treatment is performed at a room temperature, a heat treatment is preferably performed at 60°C to 700°C. Where the glass agent is used, the heat treatment is preferably performed at 500°C to 700°C. Where the silane coupling agent is used, the heat treatment is preferably performed at 60°C to 150°C. Thus, a surface coating treatment is completed to form the coating films.

Subsequently, the photopolymerizable composition (A) preliminarily prepared is typically applied to a thickness of 0.01 to 0.3 mm on the collector wiring conductor members 10 subjected to the surface coating treatment. The polymerizable composition (A) is irradiated with ultraviolet radiation by means of an ultraviolet radiation emitting device such as a high pressure mercury lamp. Conditions for the irradiation are preferably such that the irradiation intensity and the irradiation period are 0.5 to 10000 $mW/cm^2$ and 0.5 to 600 seconds, respectively, and the irradiation is carried out in a nitrogen atmosphere. The photopolymerizable composition is cured by the irradiation with the ultraviolet radiation to form the covering protective members 11.

Then, a titanium oxide paste, for example, is applied to a thickness of 5 to 50 μm in recesses defined by the collector wiring conductor members 10 and the covering protective members 11 on the electrode substrate 2, and fired at 450°C to 600°C for 0.5 to 3 hours to form a porous semiconductor film 3. Where a screen printing method or other highly accurate coating method is employed, the step of forming the porous semiconductor film 3 may precede any of the steps of providing the collector wiring conductor members, performing the surface treatment and forming the covering protective members.

In turn, the electrode substrate formed with the porous semiconductor film is dipped in an ethanol solution containing a sensitizing dye 4 at a controlled concentration. Thereafter, the electrode substrate is dipped in dehydrated ethanol for removal of an excess amount of the sensitizing dye 4, and then dried. Thus, the sensitizing dye 4 is adsorbed on the porous semiconductor film 3.

A portion of the electrode substrate 2 to be brought into contact with a seal member 7 is surface-coated with a silane coupling agent of a (meth)acryloxyalkylsilane (to be thereby formed with a coating film 7').

On the other hand, a catalyst film 6 such as a platinum vapor deposition film having a thickness of 10 to 500 nm is formed on an electrically conductive electrode surface of the electrode substrate 2' to be opposed to the electrode substrate 2 (on the side of the electrolyte solution) by a sputtering method or the like. Then, a portion of the electrode substrate 2' to be brought into contact with the seal member 7 is surface-coated with the silane coupling agent of the (meth)acryloxyalkylsilane in the same manner as the electrode substrate 2 (to be thereby formed with a coating film 7').

The photopolymerizable composition (A) preliminarily prepared is applied onto a predetermined portion of at least one of the electrode substrates 2, 2', whereby the seal member 7 is formed in an uncured state. Then, the electrode substrates 2, 2' are bonded to each other with the uncured seal member 7 with the electrically conductive electrode surfaces thereof facing inward, and the seal member 7 is irradiated with ultraviolet radiation emitted at an irradiation intensity of 0.5 to 10000 $mW/cm^2$ for an irradiation period of 0.5 to 600 seconds (preferably in a nitrogen atmosphere) by means of an ultraviolet radiation emitting device such as a high pressure mercury lamp to be thereby cured for formation of a main seal 7.

In turn, the electrolyte solution 5 is injected into a space defined between the bonded electrode substrates 2, 2' through one of openings formed in the electrode substrate 2', and then seal caps 9 of thin glass pieces on which the same compositions as for the seal member 7 and the coating film 7' are applied are respectively placed over the openings. The composition is cured in the aforementioned manner by irradiation with ultraviolet radiation to seal the openings (to form end seal members 8). Thus, the cell (II) shown in Fig. 2 is provided.

In the cell of Fig. 2, only the electrode substrate 2 is formed with the collector wiring conductor members, the

covering protective members and the like, but the electrode substrate 2' opposed to the electrode substrate 2 may also be formed with these components in the same manner as the electrode substrate 2. For the photo-electric conversion efficiency, it is preferred that the electrode substrates are each provided with the collector wiring conductor members and the covering protective members. Where the electrode substrate 2' is also formed with the collector wiring conductor members and the covering protective members, the formation of the collector wiring conductor members and the covering protective members preferably precedes the formation of the catalyst film 6.

In the dye-sensitized solar cell of Fig. 2, the seal member and the like may have a proper thickness (generally equal to a distance between the substrates) and a proper width according to the use purpose and application. The seal member 7 typically has a width of about 1 to about 5 mm and a thickness of 50 to 500 μm.

Next, inventive examples will be described in conjunction with comparative examples. However, the present invention is not limited to these inventive examples.

## Examples

Prior to implementation of the examples, ingredients for the following components were prepared or synthesized.

(Meth)acryloxyalkylsilane silane coupling agent

As the (meth)acryloxyalkylsilane silane coupling agent, 3-acryloxypropyltrimethoxysilane and 3-methacryloxypropyltrimethoxysilane were prepared.

Synthesis of elastomer derivatives

a. Synthesis of hydrogenated elastomer derivative (a)

First, 15 g (0.01 mol) of a hydrogenated polybutadiene having hydroxyl groups at its opposite molecular terminals as represented by the following general formula (1) (having a number average molecular weight of about 500, a hydroxyl value of 75 KOH mg/g, an iodine value of 10 $I_2$ mg/100g and a viscosity of 30 Pa·s/25°C), 10.2 g (0.05 mol) of norbornene diisocyanate and 20g of toluene were put in a glass reactor, and heated to 50°C in the stream of nitrogen gas. Then, 0.4 g of an ethyl acetate solution of 5 wt% dibutyltin laurate was added to the resulting mixture, and a reaction was allowed to proceed at 50°C for 6 hours. Thereafter, 0.001 g of hydroquinone and 20.7 g (0.09 mol) of 2-hydroxy-1,3-dimethacryloxypropane (glycerin dimethacrylate) were added to the resulting mixture, and a reaction was allowed to proceed at 60°C for 6 hours. In turn, the reaction product was poured in an excess amount of acetonitrile and stirred to be washed, and then a solid component was separated from a liquid component and dried at a reduced pressure. Thus, an intended hydrogenated elastomer derivative (a) was provided. The absorbance at a characteristic absorption band (about 2260 $cm^{-1}$) attributable to the isocyanate group in an infrared absorption spectrum of the reaction product (measured by a FT-IR analyzer available under Nicolet IR200 from Thermo Electron KK) was zero. Further, the weight average molecular weight of the reaction product measured on the basis of a polystyrene calibration standard by means of a gel permeation chromatograph (GPC available under HLC-8120 from Toso Co., Ltd.) was 6150.

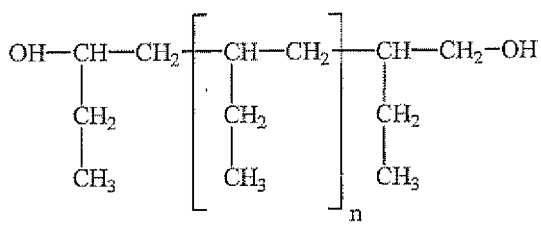

..... (1)

Wherein n is a positive integer.

b. Synthesis of hydrogenated elastomer derivative (b)

A hydrogenated elastomer derivative (b) was synthesized in substantially the same manner as the hydrogenated elastomer derivative (a), except that 15 g (0.005 mol) of a hydrogenated polybutadiene having hydroxyl groups at its opposite molecular terminals as represented by the above general formula (1) (having a number average molecular

weight of about 3000, a hydroxyl value of 30 KOH mg/g, an iodine value of 10 $I_2$ mg/100g and a viscosity of 80 Pa·s/25°C) was used instead of the hydrogenated polybutadiene (having a number average molecular weight of about 1500) used for the synthesis of the hydrogenated elastomer derivative (a). The absorbance at a characteristic absorption band (about 2260 $cm^{-1}$) attributable to the isocyanate group in an infrared absorption spectrum (FT-IR) of the reaction product was zero. Further, the weight average molecular weight of the reaction product measured on the basis of a polystyrene calibration standard by means of a gel permeation chromatograph (GPC) was 7500.

c. Syntheses of hydrogenated elastomer derivative (c)

A hydrogenated elastomer derivative (c) was synthesized in substantially the same manner as the hydrogenated elastomer derivative (a), except that 140 g (0.05 mol) of a hydrogenated polyisoprene having hydroxyl groups at its opposite molecular terminals as represented by the following general formula (2) (having a number average molecular weight of about 2800, a hydroxyl value of 4 KOH mg/g, an iodine value of 40 $I_2$ mg/100 and a viscosity of 1500 Pa·s/25°C) was used instead of the hydrogenated polybutadiene used for the synthesis of the hydrogenated elastomer derivative (a). The absorbance at a characteristic absorption band (about 2260 $cm^{-1}$) attributable to the isocyanate group in an infrared absorption spectrum (FT-IR) of the reaction product was zero. Further, the weight average molecular weight of the reaction product measured on the basis of a polystyrene calibration standard by means of a gel permeation chromatograph (GPC) was 28800.

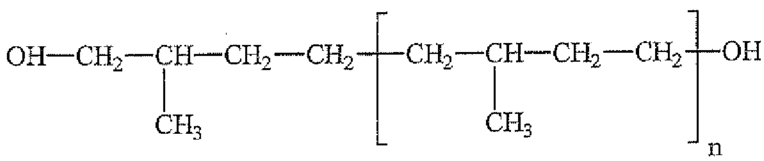

..... (2)

wherein n is a positive integer.

d. Synthesis of hydrogenated elastomer derivative (d)

First, 15 g (0.01 mol) of the hydrogenated polybutadiene having a number average molecular weight of about 1500 for the synthesis of the hydrogenated elastomer derivative (a), 7 g (0.03 mol) of 1,1-bis(acryloyloxymethyl)ethyl isocyanate as the (meth)acryloyl-containing isocyanate compound and 0.3 g of an ethyl acetate solution of 5 wt% dibutyltin laurate were added, and a reaction was allowed to proceed at 50°C for 6 hours in the stream of nitrogen gas. In turn, the reaction product was poured in an excess amount of acetonitrile and stirred to be washed, and then a solid component was separated from a liquid component and dried at a reduced pressure. Thus, an intended hydrogenated elastomer derivative (d) was provided. The absorbance at a characteristic absorption band (about 2260 $cm^{-1}$) attributable to the isocyanate group in an infrared absorption spectrum (FT-IR) of the reaction product was zero. Further, the weight average molecular weight of the reaction product measured on the basis of a polystyrene calibration standard by means of a gel permeation chromatograph (GPC) was 5020.

e. Synthesis of hydrogenated elastomer derivative (e)

A hydrogenated elastomer derivative (e) was synthesized in substantially the same manner as the hydrogenated elastomer derivative (d), except that 30 g (0.01 mol) of the hydrogenated polybutadiene having a number average molecular weight of about 3000 for the synthesis of the hydrogenated elastomer derivative (b) was used instead of the hydrogenated polybutadiene (having a number average molecular weight of about 1500) used for the synthesis of the hydrogenated elastomer derivative (d) and 15 g of toluene was used. The absorbance at a characteristic absorption band (about 2260 $cm^{-1}$) attributable to the isocyanate group in an infrared absorption spectrum (FT-IR) of the reaction product was zero. Further, the weight average molecular weight of the reaction product measured on the basis of a polystyrene calibration standard by means of a gel permeation chromatograph (GPC) was 7290.

f. Synthesis of hydrogenated elastomer derivative (f)

A hydrogenated elastomer derivative (f) was synthesized in substantially the same manner as the hydrogenated elastomer derivative (d), except that 30 g (0.012 mol) of a hydrogenated polyisoprene having hydroxyl groups at its opposite molecular terminals as represented by the above general formula (2) (having a number average molecular

weight of about 2500, a hydroxyl value of 50 KOH mg/g, an bromine value of 5 g/100g and a viscosity of 75 Pa·s/30°C) was used instead of the hydrogenated polybutadiene (having a number average molecular weight of about 1500) used for the synthesis of the hydrogenated elastomer derivative (d) and 15 g of toluene was used. The absorbance at a characteristic absorption band (about 2260 $cm^{-1}$) attributable to the isocyanate group in an infrared absorption spectrum (FT-IR) of the reaction product was zero. Further, the weight average molecular weight of the reaction product measured on the basis of a polystyrene calibration standard by means of a gel permeation chromatograph (GPC) was 9790.

g. Synthesis of unsaturated elastomer derivative (g)

An unsaturated elastomer derivative (g) was synthesized in substantially the same manner as the hydrogenated elastomer derivative (a), except that 30 g (0.02 mol) of an unsaturated polybutadiene having hydroxyl groups at its opposite molecular terminals as represented by the following general formula (3) (having a number average molecular weight of about 1500, a hydroxyl value of 70 KOH mg/g and a viscosity of 90 Pa·s/25°C) was used instead of the hydrogenated polybutadiene used for the synthesis of the hydrogenated elastomer derivative (a). The absorbance at a characteristic absorption band (about 2260 $cm^{-1}$) attributable to the isocyanate group in an infrared absorption spectrum (FT-IR) of the reaction product was zero. Further, the weight average molecular weight of the reaction product measured on the basis of a polystyrene calibration standard by means of a gel permeation chromatograph (GPC) was 5900.

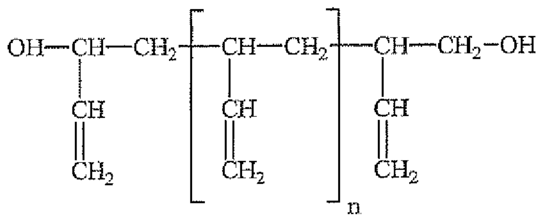

. . . . . (3)

wherein n is a positive integer.

h. Synthesis of unsaturated elastomer derivative (h)

An unsaturated elastomer derivative (h) was synthesized in substantially the same manner as the hydrogenated elastomer derivative (d), except that 15 g (0.01 mol) of the unsaturated polybutadiene represented by the above general formula (3) and having a number average molecular weight of about 1500 for the synthesis of the unsaturated elastomer derivative (g) was used instead of the hydrogenated polybutadiene used for the synthesis of the hydrogenated elastomer derivative (d). The absorbance at a characteristic absorption band (about 2260 $cm^{-1}$) attributable to the isocyanate group in an infrared absorption spectrum (FT-IR) of the reaction product was zero. Further, the weight average molecular weight of the reaction product measured on the basis of a polystyrene calibration standard by means of a gel permeation chromatograph (GPC) was 4900.

Poly(meth)acrylate compound

As the poly(meth)acrylate compound, dimethyloldicyclopentane dimethacrylate and 1,6-hexandiol diacrylate were prepared.

Photopolymerization initiator

As the photopolymerization initiator, a photo-radical polymerization initiator IRGACURE 651 available form Chiba Specialty Chemicals Co., Ltd. was prepared.

Organically treated phyllosilicate

(1) Organically treated swellable mica

Interlaminar Na ions of a mica were replaced with a tetraalkyl ammonium compound. Thus, an organically treated swellable mica was prepared which had an average length of 5 μm, a thickness of 0.1 to 0.5 μm, an aspect ratio

of 20 to 30 and an absolute specific gravity of 2.5.

(2) Organically treated synthetic smectite

Exchangeable interlaminar cations ($Na^+$, $Mg^{2+}$, $Li^+$ and the like) of a smectite were replaced with a tetraalkyl ammonium compound. Thus, an organically treated synthetic smectite was prepared which had a length of 0.1 to 2 μm, a thickness of 0.001 to 0.025 μm, an aspect ratio of 80 to 1000 and an absolute specific gravity of 2.7.

Organically treated insulative spherical inorganic filler

(1) Organically treated spherical silica α

First, 20 g of a spherical synthetic silica having a surface hydroxyl group concentration of 0.002 mmol/g, a specific surface area of 28.6 $m^2$/g, an average particle diameter of 0.1 μm and a maximum particle diameter of 2 μm, 12.91 g of hexamethylene disilazane and 100 g of hexane were put in a glass flask provided with a cooling water pipe, and the resulting mixture was refluxed at about the boiling point of hexane (65°C to 69°C) for two hours. Thereafter, the resulting spherical synthetic silica was filtered out with the use of a paper filter, and dried at a reduced pressured at 40°C for 6 hours. Thus, an organically treated spherical silica α was provided. In the infrared absorption spectrum (FT-IR) of the organically treated spherical silica α, absorption was observed at a characteristic absorption band (about 2960 $cm^{-1}$) attributable to the methyl group.

(2) Organically treated spherical silica β

First, 20 g of a spherical synthetic silica having a surface hydroxyl group concentration of 0.002 mmol/g, a specific surface area of 28.6 $m^2$/g, an average particle diameter of 0.1 μm and a maximum particle diameter of 2 μm, 2.7 g of 3-acryloxypropyltrimethoxysilane, 100 g of methanol and 0.054 g of acetic acid were put in a glass flask provided with a cooling water pipe, and the resulting mixture was stirred at about a room temperature (22°C to 26°C) for 12 hours. Thereafter, the resulting spherical synthetic silica was filtered out with the use of a paper filter, and dried at a reduced pressure at 60°C for 12 hours in a shade. Thus, an organically treated spherical silica β was provided. In the infrared absorption spectrum (FT-IR) of the organically treated spherical silica β, absorption was observed at characteristic absorption bands (about 1620 $cm^{-1}$ and about 1720 $cm^{-1}$) attributable to the acryloyl group.

(3) Organically treated spherical silica γ

First, 20 g of a spherical synthetic silica having a surface hydroxyl group concentration of 0.002 mmol/g, a specific surface area of 28.6 $m^2$/g, an average particle diameter of 0.1 μm and a maximum particle diameter of 2 μm, 22.34 g of 2-isocyanatoethyl methacrylate, 100 g of toluene and 2.3 g of an ethyl acetate solution of 5 wt% dibutyltin laurate were put in a glass flask provided with a cooling water pipe, and a reaction was caused to proceed at 50°C for 6 hours in a shade. Thereafter, the resulting spherical synthetic silica was filtered out with the use of a paper filter, and dried at a reduced pressure at 60°C for 12 hours in a shade. Thus, an organically treated spherical silica γ was provided. In the infrared absorption spectrum (FT-IR) of the organically treated spherical silica γ, the absorption at a characteristic absorption band (about 2260 $cm^{-1}$) attributable to the isocyanate group was zero, and absorption was observed at characteristic absorption bands (about 1620 $cm^{-1}$ and about 1720 $cm^{-1}$) attributable to the acryloyl group.

First, the cell (I) will be described in detail by way of examples.

Example 1-1

The following materials (I) and (II) were prepared and were assembled in the following manner (III).

(I) Preparation of specific photopolymerizable composition (A) for seal members

A photopolymerizable composition (A) was prepared by blending 3g of the hydrogenated elastomer derivative (a) as the hydrogenated elastomer derivative, 7g of dimethyloldicyclopentane dimethacrylate and 0.5 g of the photo-radical polymerization initiator.

(II) Reparation of electrode substrates each surface-coated with specific silane coupling agent

An electrode substrate of a negative electrode (hereinafter sometimes referred to simply as "negative electrode

substrate") was prepared by cutting a soda-lime glass plate formed with an ITO transparent conductor film (available from Nippon sheet glass Co., Ltd.) to a size of 10 cm 10 cm × 3 mm (thickness). A titanium oxide paste (18NR available from Shokubai Kasei Kogyo KK) was applied to a thickness of 30 μm on an electrically conductive electrode surface of the negative electrode substrate formed with the conductor film. The resulting coating film was fired at 500°C for 1 hour. Thus, a porous semiconductor film was formed. In turn, the negative electrode substrate formed with the porous semiconductor film was dipped in an ethanol solution containing a ruthenium complex sensitizing dye (RUTHENIUM 535 available from SOLARONIX) at a concentration of $3 \times 10^{-4}$ mol/L for 16 hours, and then dipped in dehydrated ethanol for removal of an excess amount of the sensitizing dye, followed by drying at 100°C. Thus, the sensitizing dye was adsorbed on the porous semiconductor film formed on the negative electrode substrate. A methanol solution of 1 wt% 3-acryloxypropyltrimethoxysilane was prepared, and applied onto a portion of the negative electrode substrate to be brought into contact with a seal member, followed by drying at 150°C for 10 minutes. Thus, the negative electrode substrate was prepared which was subjected to the surface coating treatment with the silane coupling agent.

Further, a metal titanium plate (10 cm × 10 cm × 0.5 mm (thickness)) was prepared as an electrode substrate of a positive electrode (hereinafter sometimes referred to simply as "positive electrode substrate") to be opposed to the negative electrode substrate. Then, a platinum (Pt) film having a thickness of 50 nm was formed on the positive electrode substrate by a pyrolysis method. Then, the methanol solution of 1 wt% 3-acryloxypropyltrimethoxysilane was applied onto a portion of the positive electrode substrate to be brought into contact with the seal member and dried at 150°C for 10 minutes in the same manner as described above. Thus, the positive electrode substrate was prepared which was subjected to the surface coating treatment with the silane coupling agent. The positive electrode substrate was opaque because it was formed from the metals.

Further, the methanol solution of 1 wt% 3-acryloxypropyltrimethoxysilane was applied onto thin glass pieces to be brought into contact with seal members, and dried at 150°C for 10 minutes. Thus, the thin glass pieces surface-coated with the silane coupling agent were prepared.

(III) Assembling of dye-sensitized solar cell

Amain sealing operation was performed by applying the photopolymerizable composition (A) as a seal member to a width of 5 mm and a thickness of 50 μm onto the portion of one of the electrode substrates to be brought into contact with the silane coupling agent by means of a dispenser, bonding the electrode substrates to each other with their electrically conductive electrode surfaces facing inward and opposed to each other, and irradiating the photopolymerizable composition (A) with ultraviolet radiation (at 10 $mW/cm^2$ for 300 seconds) from the side of the transparent negative electrode substrate in a nitrogen atmosphere. Thereafter, an acetonitrile solution of 0.05 mol% $LiI/I_2$ (electrolyte solution) was injected into a space defined between the electrode substrates bonded to each other in opposed relation through an opening (1 mmΦ) of the positive electrode substrate. Further, an end sealing operation was performed for sealing in substantially the same manner as described above by applying the photopolymerizable composition (A) as the seal member material onto the thin glass pieces, placing the thin glass pieces over the openings, and irradiating the photopolymerizable composition (A) with ultraviolet radiation (at 10 $mW/cm^2$ for 300 seconds) in a nitrogen atmosphere. Thus, the intended dye-sensitized solar cell was assembled.

Example 1-2

The following positive electrode substrate was used instead of the positive electrode substrate of Example 1-1. This positive electrode substrate was produced by preparing a soda-lime glass plate (available from Central Glass Co., Ltd.) cut to a size of 10 cm × 10 cm × 0.5 mm (thickness), bonding a graphite sheet (having a thickness of 100 μm) to the soda-lime glass plate and forming a 50-nm thick platinum film on the graphite sheet by a pyrolysis method. A dye-sensitized solar cell was assembled in substantially the same manner as in Example 1-1, except that this positive electrode substrate was used. The graphite sheet was black and opaque, so that the positive electrode substrate was an opaque electrode substrate as a whole.

Example 1-3

A dye-sensitized solar cell was assembled in substantially the same manner as in Example 1, except that a methanol solution of 3-methacryloxypropyltrimethoxysilane was used instead of 3-acryloxypropyltrimethoxysilane of Example 1-1 for the coating.

Example 1-4

A dye-sensitized solar cell was assembled in substantially the same manner as in Example 1-1, except that a

photopolymerizable composition prepared by blending 7 g of the hydrogenated elastomer derivative (a), 3 g of dimethyloldicyclopentane dimethacrylate and 0.5 g of the photo-radical polymerization initiator was used instead of the photopolymerizable composition (A) of Example 1-1.

Example 1-5

A dye-sensitized solar cell was assembled in substantially the same manner as in Example 1-1, except that the hydrogenated elastomer derivative (b) was used instead of the hydrogenated elastomer derivative (a) in the photopolymerizable composition of Example 1-1.

Example 1-6

A dye-sensitized solar cell was assembled in substantially the same manner as in Example 1-1, except that a photopolymerizable composition prepared by blending 5 g of the hydrogenated elastomer derivative (a), 5 g of 1,6-hexandiol diacrylate and 0.5 g of the photo-radical polymerization initiator was used instead of the photopolymerizable composition (A) of Example 1-1.

Example 1-7

A dye-sensitized solar cell was assembled in substantially the same manner as in Example 1-1, except that the hydrogenated elastomer derivative (c) was used instead of the hydrogenated elastomer derivative (a) in the photopolymerizable composition of Example 1-1.

Example 1-8

A dye-sensitized solar cell was assembled in substantially the same manner as in Example 1-1, except that the hydrogenated elastomer derivative (d) was used instead of the hydrogenated elastomer derivative (a) in the photopolymerizable composition of Example 1-1.

Example 1-9

A dye-sensitized solar cell was assembled in substantially the same manner as in Example 1-8, except that a methanol solution of 1 wt% 3-methacryloxypropyltrimethoxysilane was used instead of the silane coupling agent used in Example 1-8 and applied onto portions to be brought into contact with a seal member.

Example 1-10

A dye-sensitized solar cell was assembled in substantially the same manner as in Example 1-8, except that a photopolymerizable composition prepared by blending 7 g of the hydrogenated elastomer derivative (d), 3 g of dimethyloldicyclopentane dimethacrylate and 0.5 g of the photo-radical polymerization initiator was used instead of the photopolymerizable composition (A) used in Example 1-8.

Example 1-11

A dye-sensitized solar cell was assembled in substantially the same manner as in Example 1-8, except that the hydrogenated elastomer derivative (e) was used instead of the hydrogenated elastomer derivative (d) in the photopolymerizable composition used in Example 1-8.

Example 1-12

A dye-sensitized solar cell was assembled in substantially the same manner as in Example 1-8, except that a photopolymerizable composition prepared by blending 5 g of the hydrogenated elastomer derivative (d), 3 g of 1,6-hexandiol diacrylate and 0.5 g of the photo-radical polymerization initiator was used instead of the photopolymerizable composition (A) used in Example 1-8.

Example 1-13

A dye-sensitized solar cell was assembled in substantially the same manner as in Example 1-8, except that

the hydrogenated elastomer derivative (f) was used instead of the hydrogenated elastomer derivative (d) in the photopolymerizable composition used in Example 1-8.

Example 1-14

A dye-sensitized solar cell was assembled in substantially the same manner as in Example 1-1, except that a photopolymerizable composition prepared by adding 1 g of the organically treated swellable mice to the photopolymerizable composition (A) of Example 1-1 and milling the resulting mixture through a three-roll mill (having a roll gap of 0.1 μm) ten times was used instead of the photopolymerizable composition (A) used in Example 1-1.

Example 1-15

A dye-sensitized solar cell was assembled in substantially the same manner as in Example 1-1, except that a photopolymerizable composition prepared by adding 15 g of the organically treated synthetic smectite to the photopolymerizable composition (A) of Example 1-1 and milling the resulting mixture through a three-roll mill (having a roll gap of 0.1 μm) ten times was used instead of the photopolymerizable composition (A) used in Example 1-1.

Examples 1-16

A dye-sensitized solar cell was assembled in substantially the same manner as in Example 1-1, except that a photopolymerizable composition prepared by adding 10 g of the organically treated spherical silica α to the photopolymerizable composition (A) of Example 1-1 and milling the resulting mixture through a three-roll mill (having a roll gap of 0.1 μm) ten times was used instead of the photopolymerizable composition (A) used in Example 1-1.

Example 1-17

A dye-sensitized solar cell was assembled in substantially the same manner as in Example 1-1, except that a photopolymerizable composition prepared by adding 10 g of the organically treated spherical silica β to the photopolymerizable composition (A) of Example 1-1 and milling the resulting mixture through a three-roll mill (having a roll gap of 0.1 μm) ten times was used instead of the photopolymerizable composition (A) used in Example 1-1.

Example 1-18

A dye-sensitized solar cell was assembled in substantially the same manner as in Example 1-1, except that a photopolymerizable composition prepared by adding 10 g of the organically treated spherical silica γ to the photopolymerizable composition (A) of Example 1-1 and milling the resulting mixture through a three-roll mill (having a roll gap of 0.1 μm) ten times was used instead of the photopolymerizable composition (A) used in Example 1-1.

Comparative Example 1-1

A dye-sensitized solar cell was assembled in substantially the same manner as in Example 1-1, except that portions of electrode substrates to be brought into contact with a seal member were not subjected to any surface coating treatment.

Comparative Example 1-2

A dye-sensitized solar cell was assembled in substantially the same manner as in Example 1-1, except that a methanol solution of 1 wt% 3-glycidoxypropyltrimethoxysilane was used instead of the silane coupling agent used in Example 1-1 and applied on portions of electrode substrates to be brought into contact with a seal member.

Comparative Example 1-3

A dye-sensitized solar cell was assembled in substantially the same manner as in Example 1-1, except that the unsaturated elastomer derivative (g) was used instead of the hydrogenated elastomer derivative (a) in the photopolymerizable composition used in Example 1-1.

Comparative Example 1-4

A dye-sensitized solar cell was assembled in substantially the same manner as in Example 1-8, except that portions of electrode substrates to be brought into contact with a seal member were not subjected to any surface coating treatment.

Comparative Example 1-5

A dye-sensitized solar cell was assembled in substantially the same manner as in Example 1-8, except that a methanol solution of 1 wt% 3-glycidoxypropyltrimethoxysilane was used instead of the silane coupling agent used in Example 1-8 and applied on portions of electrode substrates to be brought into contact with a seal member.

Comparative Example 1-6

A dye-sensitized solar cell was assembled in substantially the same manner as in Example 1-8, except that the unsaturated elastomer derivative (h) was used instead of the hydrogenated elastomer derivative (d) in the photopolymerizable composition used in Example 1-8.

Reference Examples 1 (with a pair of transparent glass substrates)

The following positive electrode substrate was used instead of the positive electrode substrate of Example 1-1. First, a positive electrode substrate was prepared by cutting a soda-lime glass plate formed with an ITO transparent electrode film (available from Central Glass Co., Ltd.) to a size of 10 cm × 10 cm × 3 mm (thickness). Then, a 50-nm thick platinum (Pt) film was formed on the electrode substrate by a pyrolysis method. In turn, a methanol solution of 1 wt% 3-acryloxypropyltrimethoxysilane was applied onto a portion of the electrode substrate to be brought into contact with a seal member, and dried at 150°C for 10 minutes. Thus, the positive electrode substrate was prepared, which was subjected to the surface coating treatment with the silane coupling agent. A dye-sensitized solar cell including a pair of transparent electrode substrates was assembled in substantially the same manner as in Example 1-1, except that this positive electrode substrate was used.

The dye-sensitized solar cells thus obtained were allowed to stand in a thermostatic chamber at 40°C at 90%RH (relative humidity) for 50 days for test. Then, endurance tests for liquid leakage and swelling were performed by the following methods. The results of the tests are shown below in Tables 1 and 2.

Liquid leakage

An electrolyte solution filling area as seen from an upper side of the dye-sensitized solar cell was measured immediately after the assembling and after the test. An area percentage of the filling area measured after the test with respect to the filling area measured immediately after the assembling was determined, which was defined as an index of liquid leakage. Without the liquid leakage, the area percentage is 100%. The degree of the liquid leakage is increased as the area percentage decreases. This measurement is based on the fact that, if the electrolyte solution leaks, a space is correspondingly created, in which the electrolyte solution is not present, and the electrolyte solution filling area after the test is smaller than that before the test.

Swelling

If the electrolyte solution (containing iodine) permeates into the seal member in the assembled dye-sensitized solar cell, colorization with the iodine occurs transversely of the seal member (from the inside to the outside parallel to the substrates). Therefore, the width of the colorization with the iodine was measured, which was defined as an index of the swelling of the seal member with the electrolyte solution (based on the fact that the swelling occurs as a result of the permeation of the electrolyte solution). The swelling is less liable to occur when the width of the coloration is smaller. Since the width of the seal member is 5 mm, at the maximum, the width of the coloration with the iodine is also 5 mm at the maximum.

Table 1

| | Liquid leakage (area: %) | Swelling (Coloration width: mm) |
|---|---|---|
| Example 1-1 | 100 | 0.3 |

(continued)

| | Liquid leakage (area: %) | Swelling (Coloration width: mm) |
|---|---|---|
| Example 1-2 | 100 | 0.3 |
| Example 1-3 | 100 | 0.3 |
| Example 1-4 | 95 | 1.8 |
| Example 1-5 | 95 | 0.5 |
| Example 1-6 | 95 | 0.4 |
| Example 1-7 | 100 | 0.3 |
| Example 1-8 | 100 | 0.3 |
| Example 1-9 | 100 | 0.3 |
| Example 1-10 | 95 | 1.8 |
| Example 1-11 | 95 | 0.5 |
| Example 1-12 | 95 | 0.4 |
| Example 1-13 | 100 | 0.3 |
| Example 1-14 | 100 | 0.2 |
| Example 1-15 | 100 | 0.2 |
| Example 1-16 | 100 | ≤ 0.05 |
| Example 1-17 | 100 | ≤ 0.05 |
| Example 1-18 | 100 | ≤ 0.05 |

Table 2

| | | |
|---|---|---|
| Comparative Example 1-1 | 0 | 5.0 overall width) |
| Comparative Example 1-2 | 10 | 5.0 (overall width) |
| Comparative Example 1-3 | 70 | 5.0 (overall width) |
| Comparative Example 1-4 | 0 | 5.0 (overall width) |
| Comparative Example 1-5 | 10 | 5.0 (overall width) |
| Comparative Example 1-6 | 70 | 5.0 (overall width) |
| Reference Example 1 | 100 | 0.3 |

Tables 1 and 2 indicate that the products of the inventive examples were substantially free from the leakage of the electrolyte solution with a filling area percentage of 95% or greater as a result of the measurement of the liquid leakage. As a result of the measurement of the swelling, the products of Examples 1-4 and 1-10 each had a coloration width of 1.8 mm, but the products of the other inventive examples had little swelling with a coloration width of 0.5 mm or less. Therefore, the dye-sensitized solar cells of the inventive examples were excellent in sealing property. The dye-sensitized solar cells of the inventive examples were not inferior in durability as compared to the dye-sensitized solar cell of Reference Example 1 which included the pair of transparent electrode substrates.

On the other hand, the products of the comparative examples apparently suffered from the leakage of the electrolyte solution with a filling area percentage of 0 to 70 % as a result of the measurement of the liquid leakage. As a result of the measurement of the swelling, the products of the comparative examples disadvantageously suffered from significant swelling with a coloration width of 5 mm, which was the maximum coloration width.

The fluidity and the seal width dimensional accuracy of each of the uncured photopolymerizable compositions (A) (corresponding to the material (I) in Example 1-1) for the seal members of the dye-sensitized solar cells were measured by the following methods. The results are shown below in Table 3.

Fluidity

The viscosity of each of the photopolymerizable compositions (A) (of Examples 1-1 and 1-16 to 1-18) was measured at 25°C at 5 rpm by means of an EM-type rotary viscometer available from Tokyo Keiki, Inc. Further, the thixotropy index (0.5 rpm viscosity/5 rpm viscosity) was calculated.

Seal width dimensional accuracy

After the main sealing operation was performed by applying each of the photopolymerizable compositions (A) (of Examples 1-1 and 1-16 to 1-18) onto the portion of the electrode substrate to be brought into contact with the silane coupling agent by means of a dispenser, bonding the electrode substrate to a glass substrate having an electrically conductive transparent electrode film in opposed relation with the electrically conductive transparent electrode film facing inward, and irradiating the photopolymerizable composition (A) with ultraviolet radiation (3J/$cm^2$) in the stream of nitrogen, the seal width of the resulting seal member was measured.

Table 3

| | Fluidity | | Seal width dimensional accuracy |
|---|---|---|---|
| | Viscosity (dPas) at 25°C at 5 rpm | Thixotropy index (0.5 rpm viscosity/5 rpm viscosity) at 25°C at 5 rpm | Maximum width - minimum width (mm) |
| Example 1-1 | 100 | 1.0 | 3.5 |
| Example 1-16 | 448 | 3.7 | 0.4 |
| Example 1-17 | 660 | 4.9 | 0.3 |
| Example 1-18 | 752 | 5.4 | 0.3 |

The results shown in Table 3 indicate that the photopolymerizable compositions of Examples 1-16 to 1-18 containing the insulative spherical inorganic fillers each had a particularly greater thixotropy, and was improved in seal width dimensional accuracy. Particularly, the photopolymerizable composition of Example 1-16 containing the organically treated spherical silica α had the lowest viscosity among the photopolymerizable compositions containing the insulative spherical inorganic fillers. Therefore, the photopolymerizable composition of Example 1-16 was more excellent in coatability when a coating operation was performed with the use of a dispenser, whereby a dye-sensitized solar cell having an excellent sealing property was provided.

The above results indicate that the products of the inventive examples were less susceptible to the liquid leakage and the swelling, and their seal members were excellent in durability, resistance to electrolyte solution and adhesiveness. Particularly, the products of Examples 1-16 to 1-18 were improved in seal width dimensional accuracy. Therefore, the dye-sensitized solar cells employing these photopolymerizable compositions were highly durable during prolonged storage and prolonged use.

Next, the inventive cell (II) will be described in detail by way of examples.

Example 2-1

A dye-sensitized solar cell including a pair of transparent electrode substrates and collector wirings provided on one of the substrates was assembled in substantially the same manner as in Reference Example 1, except that a substrate including the negative electrode substrate of Reference Example 1 and collector wirings and the like provided on the negative electrode substrate, i.e., the following negative electrode substrate of Example 2-1, was used instead of the negative electrode substrate used in Reference Example 1.

a. Negative electrode substrate of Example 2-1

First, a glass substrate formed with a transparent conductor film like the negative electrode substrate used in Reference Example 1 was prepared. Collector silver wiring films (each having a width of 100 μm and a thickness of 5 μm) were formed at a pitch of 5 mm on an electrically conductive electrode surface of the electrode substrate by a screen printing method, and then fired at 600°C for 1 hour. Thus, collector wirings were formed. Thereafter, a glass paste

(G3-4965 available from Okuno Chemical Industries Co., Ltd.) was applied to a thickness of 30 μm on the collector wirings and portions of the electrode substrate formed with the collector wirings to be brought into contact with covering protective members according to the present invention, and fired at 550°C for 1 hour. Thus, glass surface-treated layers were formed.

In turn, two-layered titanium oxide films were formed on elongated portions surrounded by the collector wirings and the glass surface-treated layers with the use of two types of titanium oxide pastes by a screen printing method. If the transparent conductor films contact the electrolyte solution, reverse electron transfer occurs in which a greater number of electrons are directly transferred from the transparent conductor film into the electrolyte solution. Therefore, highly dense titanium oxide films blocking the electrolyte solution were formed as an underlying layer on the electrode substrate, and porous electrode films of titanium oxide were respectively formed on the dense titanium oxide films. More specifically, a titanium oxide paste (18NR available from Shokubai Kasei Kogyo KK) was applied to a thickness of 10 μm on the electrode substrate and dried at 80°C. Then, a paste of titanium oxide (SSP available from Sakai Chemical Co., Ltd.) was applied to a thickness of 20 μm on the resulting electrode substrate by means of a screen printing device. The resulting films were fired at 500°C for 1 hour. Thus, the titanium oxide porous films were provided.

Thereafter, the photopolymerizable composition (A) according to the present invention was applied on the glass surface-treated layers by a screen printing method, and then cured by irradiation with ultraviolet radiation emitted at 10 $mW/cm^2$ from a high pressure mercury lamp for 300 seconds in a nitrogen atmosphere. Thus, covering protective members were formed for prevention of breakage and malfunction of the collector wirings due to the electrolyte solution.

Subsequently, the negative electrode substrate formed with the titanium oxide porous films was dipped in an ethanol solution containing a ruthenium complex dye (RUTHENIUM 535 available from SOLARONIX) at a concentration of $3 \times 10^{-4}$ mol/L for 16 hours, and then dipped in dehydrated ethanol for removal of an excess amount of the dye, followed by drying at 100°C. Thus, the sensitizing dye was adsorbed on the titanium oxide porous films of the electrode substrate.

A methanol solution of 1 wt% 3-acryloxypropyltrimethoxysilane was prepared, and applied onto a portion of the electrode substrate to be brought into contact with a seal member, followed by drying at 150°C for 10 minutes. Thus, the negative electrode substrate was prepared, which was subjected to the surface coating treatment with the silane coupling agent.

Example 2-2

A dye-sensitized solar cell including a transparent electrode substrate, an opaque (metal) electrode substrate and collector wirings provided on the transparent electrode substrate was assembled in substantially the same manner as in Example 1-1, except that the negative electrode substrate of Example 2-1 including the collector wirings and the like provided on the transparent electrode substrate was used instead of the negative electrode substrate used in Example 1-1.

Example 2-3

A dye-sensitized solar cell including a transparent electrode substrate, an opaque (carbon film-containing) electrode substrate and collector wirings provided on the transparent electrode substrate was assembled in substantially the same manner as in Example 1-2, except that the negative electrode substrate of Example 2-1 including the collector wirings and the like provided on the transparent electrode substrate was used instead of the negative electrode substrate used in Example 1-2.

Example 2-4

A dye-sensitized solar cell including a pair of transparent electrode substrates and collector wirings provided on the respective substrates was assembled in substantially the same manner as in Example 2-1, except that a substrate including the positive electrode substrate of Example 2-1 and collector wirings and the like provided on the positive electrode substrate, i.e., the following positive electrode substrate of Example 2-4, was used instead of the positive electrode substrate used in Example 2-1.

b. Positive electrode substrate of Example 2-4

First, a glass substrate formed with a transparent conductor film like the positive electrode substrate used in Reference Example 1 was prepared. Collector silver wiring films (each having a width of 100 μm and a thickness of 5 μm) were formed at a pitch of 5 μm on an electrically conductive electrode surface of the electrode substrate by a screen printing method, and then fired at 600°C for 1 hour. Thus, collector wirings were formed. Thereafter, a glass paste

(G3-4965 available from Okuno Chemical Industries Co. , Ltd.) was applied to a thickness of 20 μm on the collector wirings and portions of the electrode substrate formed with the collector wirings to be brought into contact with covering protective members according to the present invention, and fired at 550°C for 1 hour. Thus, glass surface-treated layers were formed. In turn, portions of an electrically conductive electrode surface of the positive electrode substrate (including the glass surface-treated layers) to be formed with covering protective members (on the side of an electrolyte solution) were masked, and a platinum (Pt) film having a thickness of 50 nm was formed over the electrically conductive electrode surface by a sputtering method.

In turn, the photopolymerizable composition (A) according to the present invention was applied on the glass surface-treated layers by a screen printing method, and then cured by irradiation with ultraviolet radiation emitted at 10 mW/cm$^2$ from a high pressure mercury lamp for 300 seconds in a nitrogen atmosphere. Thus, the covering protective members were formed for prevention of breakage and malfunction of the collector wirings due to the electrolyte solution.

A methanol solution of 1 wt% 3-acryloxypropyltrimethoxysilane was prepared, and applied onto a peripheral portion of the electrode substrate to be brought into contact with a seal member, followed by drying at 150°C for 10 minutes. Thus, the positive electrode substrate was prepared, which was surface-coated with the silane coupling agent.

Comparative Example 2-1

A dye-sensitized solar cell including a pair of transparent electrode substrates and collector wirings provided on one of the transparent electrode substrates was assembled in substantially the same manner as in Example 2-1, except that the covering protective members according to the present invention were not formed on the negative electrode substrate of Example 2-1.

The malfunction ratio was measured for each of the dye-sensitized solar cells of the inventive examples and the comparative example in the following manner for evaluation of the durability of the covering protective members, i.e., for evaluation of the durability of the dye-sensitized solar cell. The results of the measurement are shown below in Table 4. For reference, the photo-electric conversion efficiency was measured in the following manner. The results of the measurement were also shown below in Table 4.

Malfunction ratio

When the dye-sensitized solar cells thus produced were each tested under a 100 mW/cm$^2$ illumination condition (so-called "1-Sun" illumination condition) with simulated solar light, a load was adjusted by attaching a small-size resistor to the dye-sensitized solar cell so as to operate the dye-sensitized solar cell at a maximum output (Pmax). The voltage and the current of the dye-sensitized solar cell were recorded at a constant time interval by a recorder. For each of the inventive examples and the comparative example, 25 such dye-sensitized solar cells were prepared, conditioned in the aforementioned manner, and installed. The number of the cells still working one month after the installation was determined, and the malfunction ratio was calculated from the following expression (4). The results are shown in Table 4.

$$\text{Malfunction ratio (\%)} = [1 - (\text{Number of working cells})/(\text{Number of installed cells})] \times 100 \quad ...(4)$$

Photo-electric conversion efficiency

For each of the dye-sensitized solar cells thus produced, the photo-electric conversion efficiency was measured under a 100 mW/cm$^2$ illumination condition (so-called "1-Sun" illumination condition) with simulated solar light from a xenon light source through an AM filter (AM 1.5) with the use of a solar simulator (YS-100H available from Yamashita Denso Corporation). The energy conversion efficiency η was calculated from the following expression (5):

$$\eta = 100 \times (Voc \times Jsc \times F.F.)/P_o \quad ...(5)$$

wherein η is the energy conversion efficiency (%), Voc is an open voltage (V), Jsc is a short-circuit current density (mA/cm$^2$), F.F. stands for "Filling Factor" and $P_o$ is an incident light intensity (mW/cm$^2$).

Table 4

| | Example 2-1 | Example 2-2 | Example 2-3 | Example 2-4 | Comparative Example 2-1 |
|---|---|---|---|---|---|
| Malfunction ratio (%) | 0 | 0 | 0 | 0 | 20 |
| Photo-electric conversion efficiency | | | | | |
| Open voltage: Voc (V) | 0.785 | 0.598 | 0.764 | 0.594 | 0.549 |
| Short-circuit current density: Jsc ($Am/cm^2$) | 7.8 | 14.1 | 5.6 | 11.3 | 7.0 |
| Filling factor: F.F. | 0.39 | 0.47 | 0.41 | 0.49 | 0.23 |
| Energy conversion efficiency: η (%) | 2.39 | 3.96 | 1.75 | 3.29 | 1.13 |

The results in Table 4 indicate that the dye-sensitized solar cells of Examples 2-1 to 2-4 were excellent in durability with a malfunction ratio of 0%. On the other hand, the dye-sensitized solar cell of Comparative Example 2-1, which did not employ the inventive covering protective members, was less reliable with some malfunction.

Thus, the cells (II) of the inventive examples were all excellent in durability supposedly because the covering protective members were highly resistant to the electrolyte solution and highly adhesive.

The results of the measurement of the photo-electric conversion efficiency indicate that the dye-sensitized solar cell of Example 2-2 in which the positive electrode substrate was made of the metal and the collector wirings were provided only on the negative electrode substrate had a higher energy conversion efficiency than the dye-sensitized solar cell of Example 2-4 in which the positive electrode substrate and the negative electrode substrate were each provided with the collector wirings. This means that the dye-sensitized solar cell of Example 2-2 was excellent in durability and highly practical with a higher photo-electric conversion efficiency.

## Industrial Applicability

In the inventive dye-sensitized solar cell, the seal member is composed of the material cured by photopolymerizing the specific photopolymerizable composition. This obviates the need for thermal curing. Therefore, the inventive dye-sensitized solar cell is free from the separation of the seal member which may otherwise occur due to the evaporation of the electrolyte solution caused by the heating, and free from the swelling and the degradation with the electrolyte solution even if it is sealed for a prolonged period. In addition, the synergetic effect of the aforementioned specific silane coupling agent on the electrode substrates ensures higher adhesion and higher durability. Thus, the inventive dye-sensitized solar cell is highly reliable, and finds a wide variety of applications in the field of the dye-sensitized solar cell which particularly requires the durability.

## Reference Signs List

1: Transparent electrode substrates (negative electrode)
1': Opaque or translucent electrode substrate (positive electrode)
5: Electrolyte solation
7: Seal member (main seal)

## Claims

**1.** A dye-sensitized solar cell comprising:

a pair of electrode substrates spaced a predetermined distance from each other with their electrically conductive electrode surfaces facing inward, one of the electrode substrates being opaque or translucent, the other electrode substrate being transparent;

a seal member disposed along peripheries of inner surfaces of the electrode substrates to seal a space defined

between the electrode substrates; and
an electrolyte solution filled in the sealed space;
wherein the seal member is composed of a material cured by photopolymerizing the following composition (A), and the electrode substrates each have a portion coated with a silane coupling agent of a (meth)acryloxyalkylsilane in contact with the seal member:

(A) a photopolymerizable composition essentially comprising a hydrogenated elastomer derivative having at least one (meth)acryloyl group at at least one of its opposite molecular terminals.

**2.** A dye-sensitized solar cell as set forth in claim 1, wherein the opaque or translucent electrode substrate is a metal substrate.

**3.** A dye-sensitized solar cell as set forth in claim 1, wherein the opaque or translucent electrode substrate is a substrate having a carbon conductor film.

**4.** A dye-sensitized solar cell comprising:

a pair of electrode substrates spaced a predetermined distance from each other with their electrically conductive electrode surfaces facing inward, at least one of the electrode substrates being transparent;
a seal member disposed along peripheries of inner surfaces of the electrode substrates to seal a space defined between the electrode substrates;
an electrolyte solution filled in the sealed space;
a collector wiring conductor member of a predetermined shape distributively provided on at least one of the inner surfaces of the electrode substrates; and
a covering protective member which covers and protects the collector wiring conductor member;
wherein the seal member and the covering protective member are composed of a material cured by photopolymerizing the following composition (A);
wherein the electrode substrates each have a portion coated with a silane coupling agent of a (meth)acryloxyalkylsilane in contact with the seal member;
wherein the collector wiring conductor member has a portion coated with at least one of a glass agent and the silane coupling agent in contact with the covering protective member:

(A) a photopolymerizable composition essentially comprising a hydrogenated elastomer derivative having at least one (meth)acryloyl group at at least one of its opposite molecular terminals.

**5.** A dye-sensitized solar cell as set forth in any one of claims 1 to 4, wherein the photopolymerizable composition (A) comprises a phyllosilicate.

**6.** A dye-sensitized solar cell as set forth in any one of claims 1 to 5, wherein the photopolymerizable composition (A) comprises an insulative spherical inorganic filler.

**7.** A dye-sensitized solar cell as set forth in any one of claims 1 to 6, wherein the silane coupling agent of the (meth) acryloxyalkylsilane is 3-(meth)acryloxypropyltrimethoxysilane.

**8.** A dye-sensitized solar cell as set forth in any one of claims 1 to 7, wherein the hydrogenated elastomer derivative of the photopolymerizable composition (A) comprises a hydrogenated polybutadiene in its main chain.

**9.** A dye-sensitized solar cell as set forth in any one of claims 1 to 7, wherein the hydrogenated elastomer derivative of the photopolymerizable composition (A) comprises a hydrogenated polyisoprene in its main chain.

**10.** A dye-sensitized solar cell as set forth in any one of claims 1 to 8, wherein the hydrogenated elastomer derivative of the photopolymerizable composition (A) is a hydrogenated polybutadiene derivative obtained through a reaction between a hydrogenated polybutadiene polyol and a hydroxy(meth)acrylate compound by using a polyisocyanate as a linking group.

**11.** A dye-sensitized solar cell as set forth in any one of claims 1 to 7 and 9, wherein the hydrogenated elastomer derivative of the photopolymerizable composition (A) is a hydrogenated polyisoprene derivative obtained through a reaction between a hydrogenated polyisoprene polyol and a hydroxy(meth)acrylate compound by using a polyisocyanate as a linking group.

**12.** A dye-sensitized solar cell as set forth in any one of claims 1 to 8, wherein the hydrogenated elastomer derivative of the photopolymerizable composition (A) is the following component (a1), and the photopolymerizable composition (A) further comprises the following components (b) and (c):

(a1) a hydrogenated polybutadiene derivative obtained through a reaction between a hydrogenated polybutadiene polyol and a hydroxy(meth)acrylate compound by using a polyisocyanate as a linking group;
(b) a poly(meth)acrylate compound; and
(c) a photopolymerization initiator.

**13.** A dye-sensitized solar cell as set forth in any one of claims 1 to 7 and 9, wherein the hydrogenated elastomer derivative of the photopolymerizable composition (A) is the following component (a2), and the photopolymerizable composition (A) further comprises the following components (b) and (c):

(a2) a hydrogenated polyisoprene derivative obtained through a reaction between a hydrogenated polyisoprene polyol and a hydroxy(meth)acrylate compound by using a polyisocyanate as a linking group;
(b) a poly(meth)acrylate compound; and
(c) a photopolymerization initiator.

**14.** A dye-sensitized solar cell as set forth in any one of claims 1 to 8, wherein the hydrogenated elastomer derivative of the photopolymerizable composition (A) is a hydrogenated polybutadiene derivative obtained through a reaction between a hydrogenated polybutadiene polyol and a (meth)acryloyl-containing isocyanate compound.

**15.** A dye-sensitized solar cell as set forth in any one of claims 1 to 7 and 9, wherein the hydrogenated elastomer derivative of the photopolymerizable composition (A) is a hydrogenated polyisoprene derivative obtained through a reaction between a hydrogenated polyisoprene polyol and a (meth)acryloyl-containing isocyanate compound.

**16.** dye-sensitized solar cell as set forth in any one of claims 1 to 8, wherein the hydrogenated elastomer derivative of the photopolymerizable composition (A) is the following component (a3), and the photopolymerizable composition (A) further comprises the following components (b) and (c):

(a3) a hydrogenated polybutadiene derivative obtained through a reaction between a hydrogenated polybutadiene polyol and a (meth)acryloyl-containing isocyanate compound;
(b) a poly(meth)acrylate compound; and
(c) a photopolymerization initiator.

**17.** A dye-sensitized solar cell as set forth in any one of claims 1 to 7 and 9, wherein the hydrogenated elastomer derivative of the photopolymerizable composition (A) is the following component (a4), and the photopolymerizable composition (A) further comprises the following components (b) and (c):

(a4) a hydrogenated polyisoprene derivative obtained through a reaction between a hydrogenated polyisoprene polyol and a (meth)acryloyl-containing isocyanate compound;
(b) a poly(meth)acrylate compound; and
(c) a photopolymerization initiator.

Fig. 1

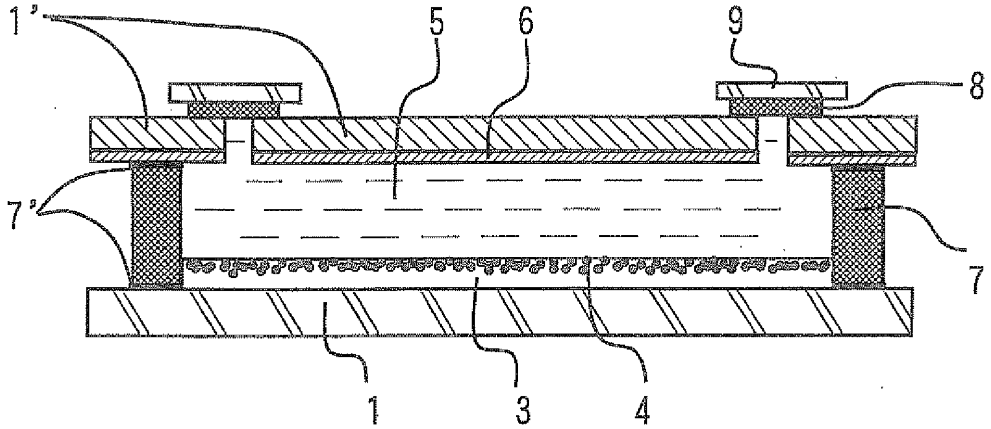


Fig.2

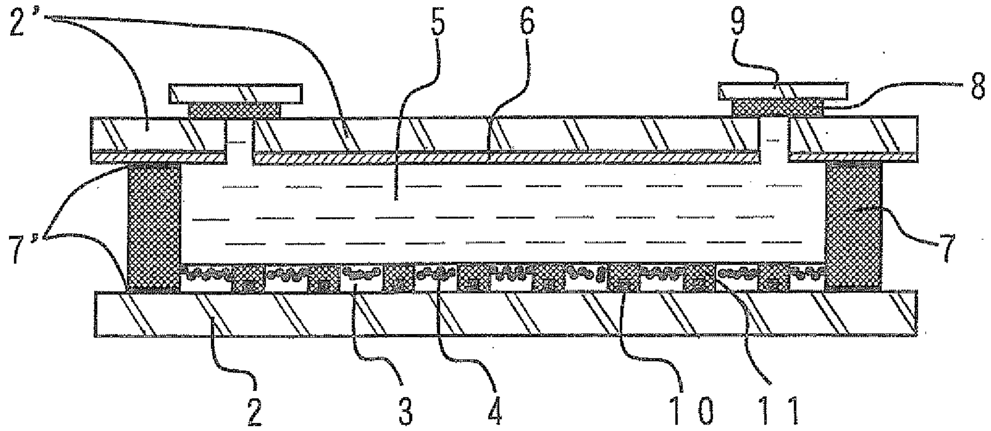

## INTERNATIONAL SEARCH REPORT

International application No.
PCT/JP2009/058010

A. CLASSIFICATION OF SUBJECT MATTER
*H01M14/00*(2006.01)i, *H01L31/04*(2006.01)i, *H01L31/042*(2006.01)i, *H01M2/08*(2006.01)i, *H01M2/26*(2006.01)i

According to International Patent Classification (IPC) or to both national classification and IPC

B. FIELDS SEARCHED

Minimum documentation searched (classification system followed by classification symbols)
H01M14/00, H01L31/04, H01L31/042, H01M2/08, H01M2/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br><br>A | JP 2006-185646 A (Three Bond Co., Ltd.), 13 July, 2006 (13.07.06), Claims; Par. Nos. [0031] to [0050] (Family: none) | 1-3,5-8,10, 12,14,16<br>4,9,11,13, 15,17 |
| Y | JP 2006-12673 A (Shin-Etsu Polymer Co., Ltd.), 12 January, 2006 (12.01.06), Claims; Par. Nos. [0054] to [0058]; Fig. 1 (Family: none) | 1-3,5-8,10, 12,14,16 |
| Y | JP 2006-324201 A (Nippon Oil Corp.), 30 November, 2006 (30.11.06), Par. No. [0034] (Family: none) | 1-3,5-8,10, 12,14,16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>17 July, 2009 (17.07.09) | Date of mailing of the international search report<br>04 August, 2009 (04.08.09) |
| Name and mailing address of the ISA/<br>Japanese Patent Office<br><br>Facsimile No. | Authorized officer<br><br>Telephone No. |

Form PCT/ISA/210 (second sheet) (April 2007)

**INTERNATIONAL SEARCH REPORT**

International application No.
PCT/JP2009/058010

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2007-39666 A (Sharp Corp.), 15 February, 2007 (15.02.07), Par. No. [0096] & US 2007/0059940 A1 | 1-3,5-8,10, 12,14,16 |
| Y | JP 2001-89616 A (Du Pont-Mitsui Polychemicals Co., Ltd.), 03 April, 2001 (03.04.01), Claims; Par. No. [0016] (Family: none) | 5-8,10,12, 14,16 |
| A | JP 2005-197176 A (Bridgestone Corp.), 21 July, 2005 (21.07.05), Claims; Par. Nos. [0059] to [0067] (Family: none) | 4-17 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000030767 A
- JP 2004095248 A
- JP 2007110739 A